# EUROPEAN PATENT APPLICATION

(11) **EP 4 497 849 A1**
(43) Date of publication of application: **29.01.2025**
(21) Application number: 23774881.9
(22) Date of filing: 20.03.2023
(51) Int. Cl.: C25B 15/029, C02F 1/461, C25B 9/19, C25B 15/00, G06N 20/00

(54) **OPERATION ASSISTANCE METHOD, OPERATION ASSISTANCE DEVICE, OPERATION ASSISTANCE SYSTEM, AND OPERATION ASSISTANCE PROGRAM**

(30) Priority: 23.03.2022 JP 2022046886; 29.09.2022 JP 2022156138
(71) Applicant: Asahi Kasei Kabushiki Kaisha, Tokyo 1000006 (JP)
(72) Inventor: YOSHINO, Hiroaki, Tokyo 100-0006 (JP)
(74) Representative: Hoffmann Eitle
(86) International application number: PCT/JP2023/010940
(87) International publication number: WO 2023/182286

(57) **Abstract**

Provided is an operation assistance apparatus comprising an estimation unit which estimates, based on an actual result value of impurity data regarding an accumulation rate of an impurity in an ion exchange membrane in an electrolyzer, a performance decrease rate of the ion exchange membrane. The actual result value of the impurity data may include actual result values of accumulation rates or actual result values of accumulation amounts of one or more elements constituting one or more impurities including the impurity accumulated in the ion exchange membrane. The estimation unit may estimate the one or more impurities including the impurity based on the actual result values of the accumulation rates or the actual result values of the accumulation amounts of the one or more elements, and estimate the performance decrease rate of the ion exchange membrane based on accumulation rates or accumulation amounts of the one or more impurities including the impurity that have been estimated.

## Description

### BACKGROUND

### 1. TECHNICAL FIELD

The present invention relates to an operation assistance apparatus, an operation assistance method, an operation assistance system, and an operation assistance program.

### 2. RELATED ART

Patent Document 1 describes that "a method for updating an ion exchange membrane according to the present embodiment includes sandwiching the ion exchange membrane between an anode side gasket and a cathode side gasket, ..." (Paragraph 0052).

### PRIOR ART DOCUMENT

### PATENT DOCUMENT

Patent Document 1: Japanese Patent Application Publication No. 2019-19408

### TECHNICAL PROBLEM

Performance of an ion exchange membrane in an electrolyzer may decrease with a running time of the electrolyzer. A decrease rate of the performance of the ion exchange membrane may change depending on an operation condition of the electrolyzer (temperature, a concentration, a current, or the like). Therefore, it is desirable that the electrolyzer should be run under an optimal operation condition. The optimal operation condition at one time point in a scheduled running period of the electrolyzer may be different from the optimal operation condition with consideration given to an entirety of the running period. Therefore, it is desirable that the electrolyzer should be run under the optimal operation condition with consideration given to the entirety of the scheduled running period.

it may be more difficult to determine the optimal operation condition of the electrolyzer with consideration given to the entirety of the scheduled running period than to determine the optimal operation condition at one time point in the running period. Therefore, it is desirable that the optimal operation condition with consideration given to the entirety of the running period can be easily recognized.

### GENERAL DISCLOSE

A first aspect of the present invention provides an operation assistance apparatus. The operation assistance apparatus includes an estimation unit which estimates, based on an actual result value of impurity data regarding an accumulation rate of an impurity in an ion exchange membrane in an electrolyzer, a performance decrease rate of the ion exchange membrane.

The actual result value of the impurity data may include actual result values of accumulation rates or actual result values of accumulation amounts of one or more elements constituting one or more impurities including the impurity accumulated in the ion exchange membrane. The estimation unit may estimate the one or more impurities including the impurity based on the actual result values of the accumulation rates or the actual result values of the accumulation amounts of the one or more elements, and estimate the performance decrease rate of the ion exchange membrane based on accumulation rates or accumulation amounts of the one or more impurities including the impurity that have been estimated.

The estimation unit may estimate types of the one or more impurities based on the actual result values of the accumulation rates or the actual result values of the accumulation amounts of the one or more elements. The estimation unit may estimate the performance decrease rate of the ion exchange membrane based on accumulation rates or accumulation amounts of one or more types of impurities that have been estimated.

The estimation unit may estimate the performance decrease rate based on a relationship between a position of the ion exchange membrane in a cross sectional direction and a concentration of the impurity accumulated in the ion exchange membrane.

The estimation unit may estimate a concentration profile of the impurity in the cross sectional direction based on the relationship between the position in the cross sectional direction of the ion exchange membrane and the concentration of the impurity, and estimate the performance decrease rate based on the concentration profile that has been estimated.

The electrolyzer may have an anode chamber and a cathode chamber separated by the ion exchange membrane. An aqueous solution of an alkali metal chloride may be induced into the anode chamber. An aqueous solution of an alkali metal hydroxide may be discharged from the cathode chamber. The estimation unit may estimate the concentration profile of the impurity in the cross sectional direction of the ion exchange membrane based on at least one of a pH of the aqueous solution of the alkali metal chloride or a pH of the aqueous solution of the alkali metal hydroxide.

The estimation unit may estimate the performance decrease rate based on concentration data on the impurity in the aqueous solution of the alkali metal chloride.

The estimation unit may estimate the performance decrease rate based on the position where the concentration profile that has been estimated has a peak. The concentration profile may be a concentration profile estimated by the estimation unit based on the relationship between the position in the cross sectional direction of the ion exchange membrane and the concentration of the impurity. The concentration profile may a concentration profile estimated by the estimation unit based on at least one of a pH of the aqueous solution of the alkali metal chloride or a pH of the aqueous solution of the alkali metal hydroxide. The estimation unit may estimate the performance decrease rate based on the position where the concentration profile that has been estimated has a peak and on the concentration data on the impurity in the aqueous solution of the alkali metal chloride.

The actual result value of the impurity data may be actual analysis data on the ion exchange membrane.

The electrolyzer may have an anode chamber and a cathode chamber separated by the ion exchange membrane. An aqueous solution of an alkali metal chloride may be induced into the anode chamber. The impurity data may include the concentration data on the impurity in the aqueous solution of the alkali metal chloride. The estimation unit may estimate the performance decrease rate based on the concentration data on the impurity. The estimation unit may estimate the performance decrease rate of the ion exchange membrane based on the concentration data on the impurity. The estimation unit may estimate the one or more impurities including the impurity based on the concentration data on the impurity, and estimate the performance decrease rate of the ion exchange membrane based on the accumulation rates or the accumulation amounts of the one or more impurities including the impurity that have been estimated. The estimation unit may estimate the one or more impurities including the impurity based on the actual result values of the accumulation rates or the actual result values of the accumulation amounts of the one or more elements, and estimate the performance decrease rate based on the accumulation rates or the accumulation amounts of the one or more impurities including the impurity that have been estimated and on the concentration data on the impurity in the aqueous solution of the alkali metal chloride.

The estimation unit may estimate, based on the performance decrease rate, a production parameter for a case where the electrolyzer is operated under one operation condition, the production parameter being related to a product produced by the electrolyzer. The performance decrease rate may be a performance decrease rate estimated by the estimation unit based on a relationship between a position in a cross sectional direction of the ion exchange membrane and a concentration of the impurity accumulated in the ion exchange membrane. The performance decrease rate may be a performance decrease rate estimated by the estimation unit, which estimates the concentration profile of the impurity in the cross sectional direction based on the relationship between the position in the cross sectional direction of the ion exchange membrane and the concentration of the impurity, based on the concentration profile that has been estimated. The performance decrease rate may be a performance decrease rate estimated by the estimation unit based on the concentration data on the impurity in the aqueous solution of the alkali metal chloride. The performance decrease rate may be a performance decrease rate estimated by the estimation unit based on the position where the concentration profile has a peak.

The estimation unit may estimate the performance decrease rate based on an actual result value of an operation condition of the electrolyzer.

The estimation unit may estimate the performance decrease rate based on a relationship between the accumulation rate or an accumulation amount of the impurity in the ion exchange membrane and the performance decrease rate. The estimation unit may estimate the performance decrease rate based on at least one of the position where the concentration profile that has been estimated has a peak or the concentration data on the impurity in the aqueous solution of the alkali metal chloride and on a relationship between the accumulation rate of the impurity accumulated in the ion exchange membrane and the performance decrease rate.

The operation assistance apparatus may further include a performance decrease learning unit which generates a performance decrease prediction model. The performance decrease prediction model may output, by performing machine learning about the relationship between the accumulation rate or the accumulation amount of the impurity and the performance decrease rate, a prediction amount of the performance decrease rate of the ion exchange membrane that is based on the relationship between the accumulation rate or the accumulation amount of the impurity and the performance decrease rate. The performance decrease rate may be a performance decrease rate estimated by the estimation unit based on a relationship between a position in a cross sectional direction of the ion exchange membrane and a concentration of the impurity accumulated in the ion exchange membrane. The performance decrease rate may be a performance decrease rate estimated by the estimation unit, which estimates the concentration profile of the impurity in the cross sectional direction based on the relationship between the position in the cross sectional direction of the ion exchange membrane and the concentration of the impurity, based on the concentration profile that has been estimated. The performance decrease rate may be a performance decrease rate estimated by the estimation unit based on the concentration data on the impurity in the aqueous solution of the alkali metal chloride. The performance decrease rate may be a performance decrease rate estimated by the estimation unit based on the position where the concentration profile has a peak. The performance decrease rate may be a performance decrease rate estimated by the estimation unit based on the actual result value of the operation condition of the electrolyzer.

The performance decrease prediction model may output, by performing machine learning about a relationship between an operation condition of the electrolyzer and the accumulation rate or the accumulation amount of the impurity, and the performance decrease rate, the prediction amount of the performance decrease rate that is based on the relationship between the operation condition of the electrolyzer and the accumulation rate or the accumulation amount of the impurity, and the performance decrease rate, for each of a plurality of operation conditions including the operation condition.

The operation assistance apparatus may include a plurality of performance decrease learning units including the performance decrease learning unit. Each of the plurality of performance decrease learning units including the performance decrease learning unit may generate the performance decrease prediction model for each of types of a plurality of ion exchange membranes including the ion exchange membrane.

The performance decrease prediction model may estimate, based on the accumulation rate or the accumulation amount of the impurity and on a production parameter regarding a product produced by the electrolyzer, an operation condition of the electrolyzer that satisfies the production parameter.

The performance decrease prediction model may estimate, if the operation condition that satisfies the production parameter does not exist, at least one of a recovery time of performance of the ion exchange membrane or a replacement time of the ion exchange membrane.

The operation assistance apparatus may further include: an acquisition unit which acquires an accumulation rate or an accumulation amount of the impurity for a case where the electrolyzer is operated under one operation condition; and a correction unit which corrects the accumulation rates or the accumulation amounts of the one or more impurities estimated by the estimation unit, based on the accumulation rate or the accumulation amount of the impurity acquired by the acquisition unit. The correction unit may correct the accumulation rates or the accumulation amounts of the one or more types of impurities estimated by the estimation unit, based on the accumulation rate or the accumulation amount of the impurity acquired by the acquisition unit.

The estimation unit may estimate the accumulation rates or the accumulation amounts of the one or more impurities in a first cycle. The estimation unit may estimate the accumulation rates or the accumulation amounts of the one or more types of impurities in the first cycle. The acquisition unit may acquire the accumulation rate of the impurity in a second cycle shorter than the first cycle.

The impurity may be at least one of barium, calcium, strontium, iodine, silicon, aluminum, nickel, magnesium, iron, titanium, or phosphorus.

A second aspect of the present invention provides an operation assistance method. The operation assistance method includes performing first estimation by estimating, by an estimation unit based on an actual result value of impurity data regarding an accumulation rate of an impurity in an ion exchange membrane in an electrolyzer, a performance decrease rate of the ion exchange membrane.

The actual result value of the impurity data may include actual result values of accumulation rates or actual result values of accumulation amounts of one or more elements constituting one or more impurities including the impurity accumulated in the ion exchange membrane. The performing the first estimation may be, by the estimation unit, estimating the one or more impurities including the impurity based on the actual result values of the accumulation rates or the actual result values of the accumulation amounts of the one or more elements, and estimating the performance decrease rate of the ion exchange membrane based on accumulation rates or accumulation amounts of the one or more impurities including the impurity that have been estimated.

The performing the first estimation may be estimating, by the estimation unit, the performance decrease rate based on a relationship between a position in a cross sectional direction of the ion exchange membrane and a concentration of the impurity accumulated in the ion exchange membrane.

The performing first estimation may be, by the estimation unit, estimating a concentration profile of the impurity in the cross sectional direction of the ion exchange membrane based on the relationship between the position in the cross sectional direction of the ion exchange membrane and the concentration of the impurity, and estimating the performance decrease rate based on the concentration profile that has been estimated. The concentration profile may a concentration profile estimated by the estimation unit based on at least one of a pH of the aqueous solution of the alkali metal chloride or a pH of the aqueous solution of the alkali metal hydroxide.

The impurity data may include concentration data on an impurity in the aqueous solution of the alkali metal chloride. The performing first estimation may be estimating, by the estimation unit, the performance decrease rate based on the concentration data on the impurity. The performing first estimation may be, by the estimation unit, estimating the one or more impurities including the impurity based on the concentration data on the impurity, and estimating the performance decrease rate based on the accumulation rates or the accumulation amounts of the one or more impurities including the impurity that have been estimated.

The performing first estimation may be estimating, by the estimation unit, the performance decrease rate based on the position in the cross sectional direction of the ion exchange membrane where the concentration profile has a peak. The concentration profile may be a concentration profile estimated by the estimation unit based on the relationship between the position in the cross sectional direction of the ion exchange membrane and the concentration of the impurity. The concentration profile may a concentration profile estimated by the estimation unit based on at least one of a pH of the aqueous solution of the alkali metal chloride or a pH of the aqueous solution of the alkali metal hydroxide.

The operation assistance method may further include performing second estimation by estimating, by the estimation unit based on the performance decrease rate estimated in the performing first estimation, a production parameter for a case where the electrolyzer is operated under one operation condition, the production parameter being related to a product produced by the electrolyzer.

The performing first estimation may be estimating, by the estimation unit, the performance decrease rate based on an actual result value of an operation condition of the electrolyzer.

The performing first estimation may be estimating, by the estimation unit, the performance decrease rate based on a relationship between the accumulation rate or an accumulation amount of the impurity accumulated in the ion exchange membrane and the performance decrease rate. The performing first estimation may be estimating, by the estimation unit, the performance decrease rate based on at least one of the position in the cross sectional direction of the ion exchange membrane where the concentration profile that has been estimated has a peak or the concentration data on the impurity in the aqueous solution of the alkali metal chloride and on a relationship between the accumulation rate or the accumulation amount of the impurity accumulated in the ion exchange membrane and the performance decrease rate.

The performing the first estimation may include learning about a performance decrease by generating, by a performance decrease learning unit, a performance decrease prediction model. The performance decrease prediction model may output, by performing machine learning about the relationship between the accumulation rate or the accumulation amount of the impurity and the performance decrease rate, a prediction amount of the performance decrease rate of the ion exchange membrane that is based on the relationship between the accumulation rate or the accumulation amount of the impurity and the performance decrease rate.

The performing the first estimation may further include estimating, by the performance decrease prediction model based on the accumulation rate or the accumulation amount of the impurity and on a production parameter regarding a product produced by the electrolyzer, an operation condition of the electrolyzer that satisfies the production parameter.

The operation assistance method may further include acquiring, by an acquisition unit, an accumulation rate or an accumulation amount of the impurity for a case where the electrolyzer is operated under one operation condition; and correcting, by a correction unit, the accumulation rates or the accumulation amounts of the one or more impurities estimated in the performing the first estimation, based on the accumulation rate or the accumulation amount of the impurity acquired in performing the acquiring. Performing the correcting may be correcting, by the correction unit, accumulation rates or accumulation amounts of one or more types of impurities estimated in the performing the first estimation, based on the accumulation rate or the accumulation amount of the impurity acquired in performing the acquiring.

A third aspect of the present invention provides an operation assistance system. The operation assistance system includes the operation assistance apparatus; and an electrolytic apparatus having the electrolyzer.

A fourth aspect of the present invention provides an operation assistance program. The operation assistance program is an operation assistance program that causes a computer to function as the operation assistance apparatus.

The summary clause does not necessarily describe all necessary features of the embodiments of the present invention. The present invention may also be a sub-combination of the features described above.

### BRIEF DESCRIPTION OF THE DRAWINGS

FIG. 1 is a diagram showing one example of an electrolytic apparatus 200 according to one embodiment of the present invention.
FIG. 2 is a diagram showing one example of details of one electrolysis cell 91 in FIG. 1.
FIG. 3 is an enlarged view of a vicinity of an ion exchange membrane 84 in the electrolysis cell 91 shown in FIG. 2.
FIG. 4 is a diagram showing one example of a block diagram of an operation assistance apparatus 100 according to one embodiment of the present invention.
FIG. 5 is a diagram showing one example of a relationship between an accumulation amount of an impurity Im and a current efficiency CE for each impurity Im.
FIG. 6 is a diagram showing one example of a relationship between a position in a cross sectional direction of an ion exchange membrane 84 and a concentration of an alkali metal.
FIG. 7 is a figure schematically showing a cluster 85 of an ion exchange membrane 84.
FIG. 8 is a figure schematically showing a cluster 85 of an ion exchange membrane 84.
FIG. 9 is a diagram showing one example of a relationship between a position in a cross sectional direction of an ion exchange membrane 84 and a pH.
FIG. 10 is a diagram showing one example of a relationship between an elapsed time t and current efficiency CE for each impurity Im.
FIG. 11 is a diagram showing another example of a block diagram of an operation assistance apparatus 100 according to one embodiment of the present invention.
FIG. 12 is a diagram showing one example of a performance decrease prediction model 62.
FIG. 13 is a diagram showing one example of an output manner in an output unit 32.
FIG. 14 is a diagram showing another example of a block diagram of an operation assistance apparatus 100 according to one embodiment of the present invention.
FIG. 15 is a diagram showing one example of prediction of a prediction amount VLp or estimation of an operation condition Cd by using a performance decrease prediction model 62.
FIG. 16 is a diagram showing one example of estimation of a recovery time of performance of an ion exchange membrane 84 or a replacement time of an ion exchange membrane 84 by using a performance decrease prediction model 62.
FIG. 17 is a diagram showing another example of a block diagram of an operation assistance apparatus 100 according to one embodiment of the present invention.
FIG. 18 is a diagram showing one example of acquisition timing of an accumulation rate or an accumulation amount of an impurity Im by using an acquisition unit 35 and acquisition timing of an accumulation rate or an accumulation amount of an impurity Im by using an estimation unit 10.
FIG. 19 is a flowchart showing one example of an operation assistance method according to one embodiment of the present invention.
FIG. 20 is a diagram showing one example of a computer 2200 in which an operation assistance apparatus 100 according to an embodiment of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

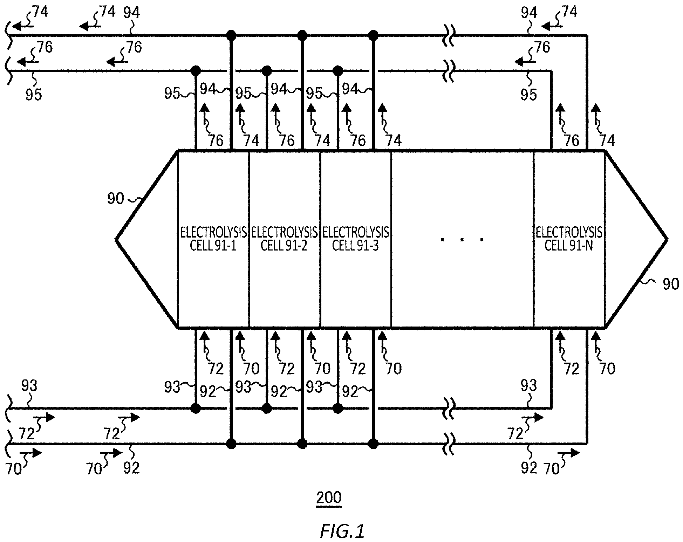

FIG. 1 is a diagram showing one example of an electrolytic apparatus 200 according to one embodiment of the present invention. The electrolytic apparatus 200 in the present example includes an electrolyzer 90, induction piping 92, induction piping 93, discharge piping 94, and discharge piping 95.

The electrolytic apparatus 200 is an apparatus which electrolyzes an electrolytic solution. The electrolyzer 90 is a tank in which an electrolytic solution is electrolyzed. The electrolytic solution is, for example, an NaCl (sodium chloride) aqueous solution. In the present specification, a case where the electrolytic solution is an NaCl (sodium chloride) aqueous solution is referred to as brine electrolysis. In a case of the brine electrolysis, the electrolyzer 90 produces Cl₂ (chlorine), NaOH (sodium hydroxide), and H₂ (hydrogen) by electrolyzing the NaCl (sodium chloride) aqueous solution. The electrolyzer 90 may include a plurality of electrolysis cells 91 (electrolysis cells 91-1 to 91-N, where N is an integer equal to or greater than 2). N is, for example, 50.

The electrolytic solution electrolyzed in the electrolyzer 90 may be an NaOH (sodium hydroxide) aqueous solution or a KOH (potassium hydroxide) aqueous solution. In the present specification, a case where the electrolytic solution is an NaOH (sodium hydroxide) aqueous solution or a KOH (potassium hydroxide) aqueous solution is referred to as alkaline water electrolysis. In a case of the alkaline water electrolysis, the electrolyzer 90 produces O₂ (oxygen) and H₂ (hydrogen) by electrolyzing an NaOH (sodium hydroxide) aqueous solution or a KOH (potassium hydroxide) aqueous solution.

In the present example, the induction piping 92 and the induction piping 93 are connected to each of the electrolysis cells 91-1 to 91-N. A liquid 70 is induced into each of the electrolysis cells 91-1 to 91-N. The liquid 70 may be induced into each of the electrolysis cells 91-1 to 91-N after passing through the induction piping 92. The liquid 70 is an aqueous solution of an alkali metal chloride. An alkali metal is an element that belongs to Group 1 of the periodic table of the elements. In the case of the brine electrolysis, the liquid 70 is an NaCl (sodium chloride) aqueous solution. In the case of the alkaline water electrolysis, the liquid 70 is an NaOH (sodium hydroxide) aqueous solution or a KOH (potassium hydroxide) aqueous solution.

A liquid 72 is induced into each of the electrolysis cells 91-1 to 91-N. The liquid 72 may be induced into each of the electrolysis cells 91-1 to 91-N after passing through the induction piping 93. The liquid 72 is an aqueous solution of an alkali metal hydroxide. In the case of the brine electrolysis, the liquid 72 is an NaOH (sodium hydroxide) aqueous solution. In the case of the alkaline water electrolysis, the liquid 72 is an NaOH (sodium hydroxide) aqueous solution or a KOH (potassium hydroxide) aqueous solution.

In the present example, the discharge piping 94 and the discharge piping 95 are connected to each of the electrolysis cells 91-1 to 91-N. A liquid 76 and a gas 78 (described later) are discharged from each of the electrolysis cells 91-1 to 91-N. The liquid 76 and the gas 78 (described later) may be discharged out of the electrolytic apparatus 200 after passing through the discharge piping 95. The liquid 76 is an aqueous solution of the alkali metal hydroxide. If the liquid 72 is an NaOH (sodium hydroxide) aqueous solution, the liquid 76 is an NaOH (sodium hydroxide) aqueous solution. The gas 78 (described later) may be H₂ (hydrogen).

A liquid 74 and a gas 77 (described later) are discharged from each of the electrolysis cells 91-1 to 91-N. The liquid 74 and the gas 77 (described later) may be discharged out of the electrolytic apparatus 200 after passing through the discharge piping 94. The liquid 74 is an aqueous solution of the alkali metal chloride. If the liquid 70 is an NaCl (sodium chloride) aqueous solution, the liquid 74 is an NaCl (sodium chloride) aqueous solution. The gas 77 (described later) may be Cl₂ (chlorine).

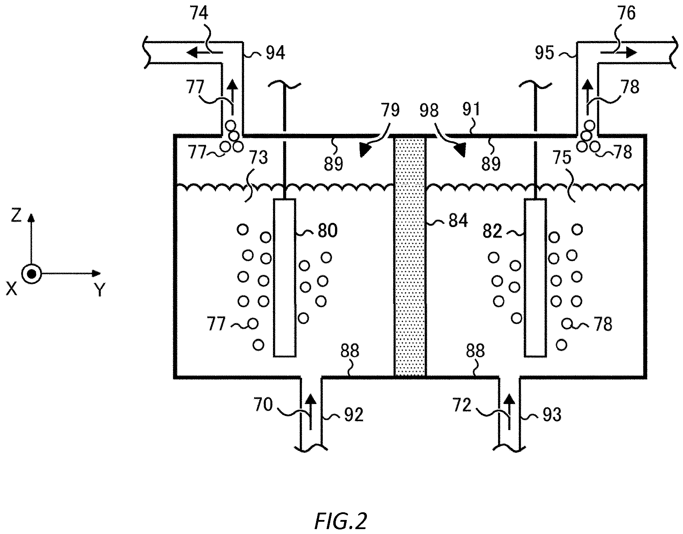

FIG. 2 is a diagram showing one example of details of one electrolysis cell 91 in FIG. 1. An electrolyzer 90 has an anode chamber 79, an anode 80, a cathode chamber 98, a cathode 82, and an ion exchange membrane 84. In the present example, the one electrolysis cell 91 has an anode chamber 79, an anode 80, a cathode chamber 98, a cathode 82, and an ion exchange membrane 84. The anode chamber 79 and the cathode chamber 98 are provided inside the electrolysis cell 91. The anode chamber 79 and the cathode chamber 98 are separated by the ion exchange membrane 84. The anode 80 is arranged in the anode chamber 79. The cathode 82 is arranged in the cathode chamber 98.

In the present specification, technical matters may be described by using orthogonal coordinate axes of the X axis, the Y axis, and the Z axis. In the present specification, a plane parallel to a bottom surface 88 of the anode chamber 79 and the cathode chamber 98 is referred to as the XY plane. In the present specification, a direction connecting the bottom surface 88, and a ceiling surface 89 of the anode chamber 79 and the cathode chamber 98 (a direction perpendicular to the bottom surface 88) is referred to as the Z axis direction. In the present specification, a direction from the anode 80 toward the cathode 82 is referred to as the Y axis direction, and a direction orthogonal to the Y axis in the XY plane is referred to as the X axis direction. The Z axis direction may be parallel to the gravitational direction. If the Z axis direction is parallel to the gravitational direction, the XY plane may be a horizontal plane.

The induction piping 92 and the discharge piping 94 are connected to the anode chamber 79. The induction piping 93 and the discharge piping 95 are connected to the cathode chamber 98. The liquid 70 is induced into the anode chamber 79. The liquid 72 is induced into the cathode chamber 98.

The ion exchange membrane 84 is a membranous substance preventing passage of an ion having a sign opposite to that of an ion arranged in the ion exchange membrane 84 and allowing passage of an ion having the same sign. In the case of the brine electrolysis, the ion exchange membrane 84 is a membrane allowing passage of Na⁺ (sodium ion) and preventing passage of Cl⁻ (chloride ion).

The anode 80 and the cathode 82 may be respectively maintained at a predetermined positive potential and negative potential. The liquid 70 induced into the anode chamber 79 and the liquid 72 induced into the cathode chamber 98 are electrolyzed due to a potential difference between the anode 80 and the cathode 82. In each of the cases of the brine electrolysis and the alkaline water electrolysis, the anode 80 undergoes the following chemical reactions.

(Chemical Formula 1-1) (brine electrolysis) 2Cl⁻ → Cl₂ + 2e⁻

(Chemical Formula 1-2) (alkaline water electrolysis) 4OH⁻ → O₂ + 2H₂O + 4e⁻

If the liquid 70 is an NaCl (sodium chloride) aqueous solution, NaCl (sodium chloride) is ionized into Na⁺ (sodium ion) and Cl⁻ (chloride ion). In the anode 80, a Cl₂ (chlorine) gas is produced by the chemical reaction shown in Chemical Formula 1-1. The gas 77 (the Cl₂ (chlorine) gas) and the liquid 74 may be discharged from the anode chamber 79. Na⁺ (sodium ion) moves from the anode chamber 79 to the cathode chamber 98 through the ion exchange membrane 84 due to an attractive force from the cathode 82.

If the liquid 70 is an NaOH (sodium hydroxide) aqueous solution, NaOH (sodium hydroxide) is ionized into Na⁺ (sodium ion) and OH⁻ (hydroxide ion). In the anode 80, H₂O (water) and an O₂ (oxygen) gas are produced by the chemical reaction shown in Chemical Formula 1-2. The gas 77 (the O₂ (oxygen) gas) and the liquid 74 may be discharged from the anode chamber 79. Na⁺ (sodium ion) moves from the anode chamber 79 to the cathode chamber 98 through the ion exchange membrane 84 due to the attractive force from the cathode 82.

A liquid 73 may be retained in the anode chamber 79. The liquid 73 may be an aqueous solution of the alkali metal chloride. In the case of the brine electrolysis, the liquid 73 is an NaCl (sodium chloride) aqueous solution. An Na⁺ (sodium ion) concentration and a Cl⁻ (chloride ion) concentration in the liquid 73 may be respectively lower than an Na⁺ (sodium ion) concentration and a Cl⁻ (chloride ion) concentration in the liquid 70. In the case of the alkaline water electrolysis, the liquid 73 is an NaOH (sodium hydroxide) aqueous solution or a KOH (potassium hydroxide) aqueous solution.

The cathode 82 undergoes the following chemical reaction.

(Chemical Formula 2) 2H₂O + 2e⁻ → H₂ + 2OH⁻

If the liquid 72 is an NaOH (sodium hydroxide) aqueous solution, NaOH (sodium hydroxide) is ionized into Na⁺ (sodium ion) and OH⁻ (hydroxide ion). In the cathode 82, an H₂ (hydrogen) gas and OH⁻ (hydroxide ion) are produced by the chemical reaction shown in Chemical Formula 2. The gas 78 (the H₂ (hydrogen) gas) and the liquid 76 may be discharged from the cathode chamber 98.

A liquid 75 may be retained in the cathode chamber 98. The liquid 75 is an aqueous solution of the alkali metal hydroxide. In the present example, the liquid 75 is an NaOH (sodium hydroxide) aqueous solution or a KOH (potassium hydroxide) aqueous solution. In the present example, the cathode chamber 98 retains the liquid 75 in which OH⁻ (hydroxide ion) produced by the chemical reaction shown in Chemical Formula 2 and Na⁺ (sodium ion) moved from the anode chamber 79 are dissolved.

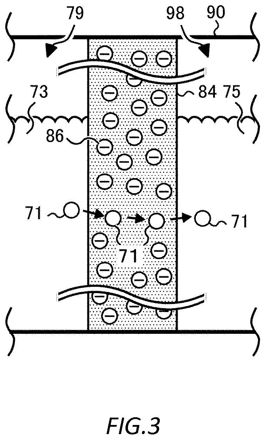

FIG. 3 is an enlarged view of a vicinity of the ion exchange membrane 84 in the electrolysis cell 91 shown in FIG. 2. Anion groups 86 are fixed to the ion exchange membrane 84 in the present example. Since an anion is repelled by the anion groups 86, it is difficult for the anion to pass through the ion exchange membrane 84. In the present example, the anion is Cl⁻ (chloride ion). Since a cation 71 is not repelled by the anion groups 86, it can pass through the ion exchange membrane 84. If the liquid 70 (see FIG. 2) is an NaCl (sodium chloride) aqueous solution, the cation 71 is Na⁺ (sodium ion).

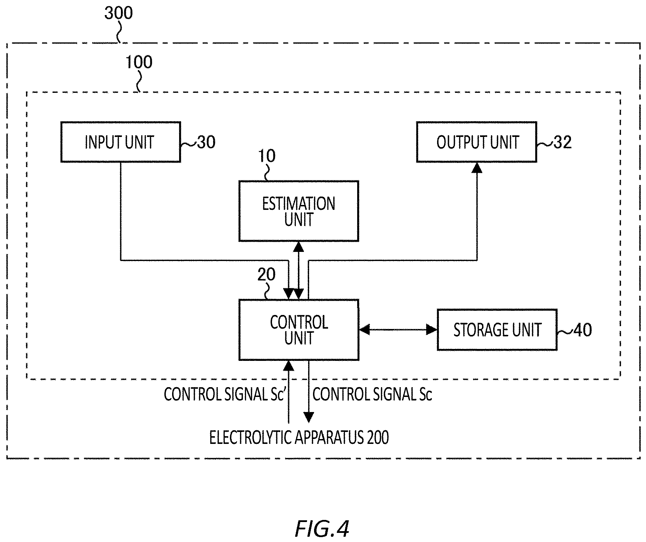

FIG. 4 is a diagram showing one example of a block diagram of an operation assistance apparatus 100 and an operation assistance system 300 according to one embodiment of the present invention. The operation assistance apparatus 100 assists operation of an electrolyzer 90 (see FIG. 1). The operation assistance apparatus 100 includes an estimation unit 10. The operation assistance apparatus 100 may include a control unit 20, an input unit 30, an output unit 32, and a storage unit 40. In FIG. 4, a range of the operation assistance apparatus 100 is indicated by a broken line, and a range of the operation assistance system 300 is indicated by a dashed-dotted line.

The operation assistance system 300 includes the operation assistance apparatus 100 and an electrolytic apparatus 200. The control unit 20 may transmit a control signal Sc for controlling the electrolytic apparatus 200 to the electrolytic apparatus 200. The control unit 20 may wirelessly transmit the control signal. The electrolytic apparatus 200 may transmit a control signal Sc' to the control unit 20. The electrolytic apparatus 200 may wirelessly transmit the control signal Sc'.

Part or whole of the operation assistance apparatus 100 is a computer including a CPU, a memory, an interface, and the like, as one example. The control unit 20 may be the CPU. The estimation unit 10 and the control unit 20 may make one CPU which is the CPU. If the operation assistance apparatus 100 is a computer, the computer may have an operation assistance program installed therein that causes an operation assistance method described later to be executed, or may have an operation assistance program installed therein that causes the computer to function as the operation assistance apparatus 100.

The input unit 30 is, for example, a keyboard, a mouse, or the like. The output unit 32 outputs a result of estimation performed by the estimation unit 10. The output unit 32 is, for example, a display, a monitor, or the like.

Since the electrolyzer 90 (see FIG. 1) electrolyzes a liquid 70, one or more impurities may be accumulated in a ion exchange membrane 84 as a running time of the electrolyzer 90 elapses. The impurities accumulated in the ion exchange membrane 84 are referred to as impurities Im. An impurity Im may be a compound, or may be an element. One or more impurities Im may refer to one or more types of impurities Im. If the impurity Im is accumulated in the ion exchange membrane 84, performance of the ion exchange membrane 84 may decrease. The performance of the ion exchange membrane 84 refers to ion exchange performance of the ion exchange membrane 84.

The electrolyzer 90 (see FIG. 1) has the liquid 70 (see FIG. 1) induced thereinto that has been subjected to a predetermined treatment on brine in which raw salt is dissolved. The predetermined treatment is, for example, precipitation of an SS (suspended solid) included in the brine by using a clarifier, removal of the SS by using a ceramic filter, removal of at least one of Ba (barium), Ca (calcium), Sr (strontium), or Mg (magnesium) included in the brine by using a resin tower, or the like.

The raw salt may include at least one of I (iodine), Fe (iron), Ti (titanium), or P (phosphorus). The SS (suspended solid) may include at least one of Si (silicon) or Al (aluminum). The impurity Im may include at least one of Ba (barium), Ca (calcium), Sr (strontium), Mg (magnesium), I (iodine), Fe (iron), Ti (titanium), Si (silicon), Al (aluminum), or P (phosphorus).

A surface of a cathode 82 may be provided with Ni (nickel). The surface of the cathode 82 may have Ni (nickel) formed thereon by plating. As the running time of the electrolyzer 90 elapses, a liquid 75 (see FIG. 2) may come to include Ni (nickel) provided on the surface of the cathode 82. The impurity Im may include Ni (nickel).

The estimation unit 10 estimates a performance decrease rate of the ion exchange membrane 84 based on an actual result value of impurity data regarding an accumulation rate of the impurity Im in the ion exchange membrane 84. The impurity data is referred to as impurity data Di. An actual result value of the impurity data Di is referred to as an actual result value Vi. The performance decrease rate of the ion exchange membrane 84 is referred to as a performance decrease rate VL. The actual result value Vi of the impurity data Di may include actual result values of accumulation rates or actual result values of accumulation amounts of one or more elements constituting the one or more impurities Im accumulated in the ion exchange membrane 84. The actual result values of the accumulation rates or the actual result values of the accumulation amounts of the one or more elements are referred to as actual result values Vi'.

The estimation unit 10 may estimate the one or more impurities Im based on the actual result values Vi'. The estimation unit 10 may estimate types of the one or more impurities Im based on the actual result values Vi'. If the impurity Im is a compound, a type of the impurity Im refers to a type of the compound. If the impurity Im is an element, a type of the impurity Im refers to a type of the element. The estimation unit 10 may estimate the performance decrease rate VL of the ion exchange membrane 84 based on accumulation rates or accumulation amounts of the one or more impurities Im that have been estimated. The estimation unit 10 may estimate the performance decrease rate VL of the ion exchange membrane 84 based on accumulation rates or accumulation amounts of the one or more types of impurities Im that have been estimated.

The actual result value Vi and the actual result values Vi' may be actual analysis data on the ion exchange membrane 84. The actual analysis data refers to data evaluated by actually analyzing the ion exchange membrane 84. If the impurity Im is a compound, the actual result values Vi' may be actual analysis data on accumulation amounts or accumulation rates of a plurality of elements constituting the compound accumulated in the ion exchange membrane 84 and each of the elements. The estimation unit 10 may estimate one or more compounds based on an accumulation amount or an accumulation rate of each of the elements that has been actually analyzed. The one or more compounds may refer to one or more types of compounds. The estimation unit 10 may estimate types of the one or more compounds based on the accumulation amount or the accumulation rate of each of the elements that has been actually analyzed.

If the impurity Im is an element, the actual result values Vi' may be analysis data obtained by analyzing accumulation amounts or accumulation rates of one or more elements accumulated in the ion exchange membrane 84 for each of the elements. The estimation unit 10 may estimate the one or more elements based on an accumulation amount or an accumulation rate of each of the elements that has been actually analyzed. The one or more elements refer to one or more types of elements.

Accumulation amounts of one or more elements constituting the impurity Im may be accumulation amounts over a predetermined period Te. The period Te is, for example, one year. Accumulation rates of the one or more elements constituting the impurity Im may be accumulation amounts per predetermined period Te'. The period Te' may be equal to or different from the period Te.

The estimation unit 10 may calculate, for the one or more impurities Im that have been estimated, accumulation rates or accumulation amounts of the impurities Im. The accumulation amounts of the impurities Im may be accumulation amounts of the impurities Im over the period Te'. The accumulation rates of the impurities Im may be accumulation amounts of the impurities Im per period Te'. The estimation unit 10 may calculate the accumulation rate or the accumulation amount of the impurity Im for each of the impurities Im.

The actual result value Vi may be evaluated with the ion exchange membrane 84 detached from the electrolyzer 90, or may be evaluated with the ion exchange membrane 84 attached to the electrolyzer 90. The actual result values Vi' may be data obtained by analyzing a relationship between an accumulation amount or an accumulation rate of each of a plurality of elements constituting the impurity Im, and the running time of the electrolyzer 90 with the ion exchange membrane 84 attached to the electrolyzer 90.

The actual result value Vi may be inputted by the input unit 30. The actual result value Vi inputted by the input unit 30 may be stored in the storage unit 40.

If the performance of the ion exchange membrane 84 decreases, an alkali metal chloride included in a liquid 73 may pass through the ion exchange membrane 84. The alkali metal chloride that has passed through the ion exchange membrane 84 may be included in the liquid 75. As mentioned above, the liquid 75 is an aqueous solution of an alkali metal hydroxide.

The impurity data Di may include concentration data on the impurity Im in the liquid 73. If the liquid 73 is an NaCl (sodium chloride) aqueous solution, the actual result value Vi may be actual analysis data obtained by actually analyzing a concentration of the impurity Im in the NaCl (sodium chloride) aqueous solution.

The estimation unit 10 may estimate the performance decrease rate VL of the ion exchange membrane 84 based on the concentration data on the impurity Im in the liquid 73. The estimation unit 10 may estimate the one or more impurities Im based on the concentration data on the impurity Im, and estimate the performance decrease rate VL of the ion exchange membrane 84 based on the accumulation rates or the accumulation amounts of the one or more impurities Im that have been estimated. The estimation unit 10 may estimate the one or more impurities Im based on the actual result values Vi', and estimate the performance decrease rate VL of the ion exchange membrane 84 based on the accumulation rates or the accumulation amounts of the one or more impurities Im that have been estimated and on the concentration data on the impurity Im in the liquid 73.

The performance decrease rate VL may be a decrease rate of current efficiency CE of the electrolyzer 90. The current efficiency CE refers to a ratio of an actual production amount to a theoretical production amount of a product produced by the electrolyzer 90. The product is referred to as a product P. A theoretical production amount of the product P is referred to as an production amount Pa. An actual production amount of the product P is referred to as an production amount Pr. The current efficiency CE refers to a ratio of the production amount Pr to the production amount Pa. The greater the accumulation amount of the impurity Im in the ion exchange membrane 84 is, the more easily the current efficiency CE decreases.

The performance decrease rate VL may be an increase rate of a voltage CV of the electrolyzer 90. The greater the accumulation amount of the impurity Im in the ion exchange membrane 84 is, the more easily the voltage CV increases.

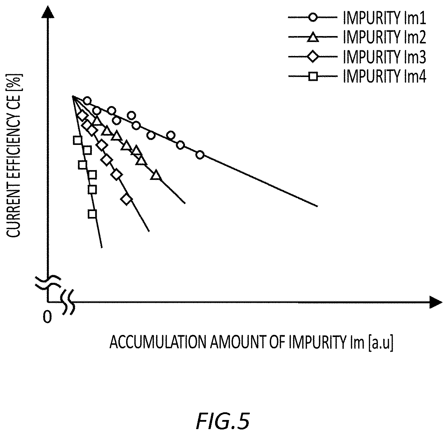

FIG. 5 is a diagram showing one example of a relationship between an accumulation amount of an impurity Im and a current efficiency CE for each impurity Im. FIG. 5 shows, for each of four impurities Im (impurities Im1 to Im4), the relationship between the accumulation amount of the impurity Im and the current efficiency CE. Types of the impurities Im1 to Im4 are different from each other. The impurity Im1 is, for example, a compound of Ba (barium) and I (iodine). The impurity Im2 is, for example, a compound of Ca (calcium), Sr (strontium), and I (iodine). The impurity Im3 is, for example, I (iodine). The impurity Im4 is, for example, a compound of Si (silicon) and Al (aluminum).

As shown in FIG. 5, the greater the accumulation amount of the impurity Im becomes, the more easily the current efficiency CE decreases. As shown in FIG. 5, a decrease amount of the current efficiency CE per accumulation amount of the impurity Im may differ depending on a type of the impurity Im. The relationship between the accumulation amount of the impurity Im and the current efficiency CE shown in FIG. 5 may be stored in a storage unit 40.

In an operation assistance apparatus 100, an estimation unit 10 estimates a performance decrease rate VL based on an accumulation rate or the accumulation amount of the impurity Im. Therefore, a user of the operation assistance apparatus 100 can recognize a future performance decrease of an ion exchange membrane 84.

The estimation unit 10 may estimate the performance decrease rate VL based on accumulation rates or accumulation amounts of a plurality of impurities Im. A performance decrease rate of the ion exchange membrane 84 for each of the impurities Im is referred to as a performance decrease rate VL'. In the example shown in FIG. 5, performance decrease rates of the ion exchange membrane 84 for the impurities Im1 to Im4 are respectively referred to as performance decrease rates VL'1 to VL'4.

The estimation unit 10 may estimate the performance decrease rate VL of the ion exchange membrane 84 based on a relationship between the accumulation rate or the accumulation amount of the impurity Im and the performance decrease rate VL. The estimation unit 10 may estimate the performance decrease rate VL of the ion exchange membrane 84 in which the plurality of impurities Im have been accumulated, based on a relationship between the accumulation rate or the accumulation amount of the impurity Im for each of the impurities Im and the performance decrease rate VL' for each of the impurities Im. The relationship between the accumulation rate or the accumulation amount of the impurity Im and the performance decrease rate VL' may be an actual result of the relationship between the accumulation rate or the accumulation amount of the impurity Im and the performance decrease rate VL'. In the example shown in FIG. 5, the estimation unit 10 estimates the performance decrease rate VL based on a relationship between the accumulation amount of the impurity Im1 and a performance decrease rate VL1', a relationship between the accumulation amount of the impurity Im2 and a performance decrease rate VL2', a relationship between the accumulation amount of the impurity Im3 and a performance decrease rate VL3', and a relationship between the accumulation amount of the impurity Im4 and a performance decrease rate VL4'.

An operation condition of an electrolyzer 90 is referred to as an operation condition Cd. The operation condition Cd refers to an operation situation of the electrolyzer 90 that may affect a state of the ion exchange membrane 84. The estimation unit 10 may estimate the performance decrease rate VL of the ion exchange membrane 84 based on an actual result value of the operation condition Cd. The actual result value is referred to as an actual result value Vd. The estimation unit 10 may estimate the performance decrease rate VL based on the accumulation rate or the accumulation amount of the impurity Im and on the actual result value Vd. The operation condition Cd may include the current efficiency CE, a voltage CV, a pH and a flow rate of a liquid 70 (see FIG. 2), a pH and a flow rate of a liquid 72 (see FIG. 2), as well as temperature of a liquid 73 (see FIG. 2) or a liquid 75 (see FIG. 2).

The actual result value of the operation condition Cd is referred to as an actual result value Cd. The actual result value Vd may be at least one of an actual result value of a current of the electrolyzer 90, an actual result value of the current efficiency CE, an actual result value of the voltage CV, actual result values of the pH and the flow rate of the liquid 70 (an aqueous solution of an alkali metal chloride), actual result values of the pH and the flow rate of the liquid 72 (an aqueous solution of an alkali metal hydroxide), as well as an actual result value of the temperature of the liquid 73 (see FIG. 2) or the liquid 75 (see FIG. 2). The current efficiency CE shown in FIG. 5 may be the actual result value of the current efficiency CE. The actual result value Vd may be inputted by an input unit 30. The actual result value Vd inputted by the input unit 30 may be stored in the storage unit 40.

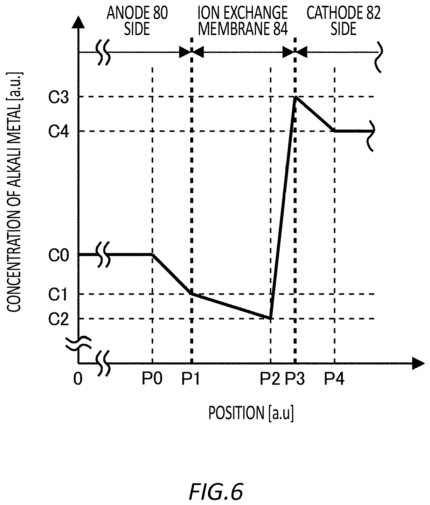

FIG. 6 is a diagram showing one example of a relationship between a position in a cross sectional direction of an ion exchange membrane 84 and a concentration of an alkali metal. FIG. 6 is one example of a concentration profile of the alkali metal across an anode chamber 79, the ion exchange membrane 84, and a cathode chamber 98. The cross sectional direction of the ion exchange membrane 84 refers to a direction from the anode chamber 79 (see FIG. 2) toward the cathode chamber 98 (see FIG. 2) in the ion exchange membrane 84. The cross sectional direction of the ion exchange membrane 84 refers to a direction intersecting a surface of the ion exchange membrane 84. The cross sectional direction of the ion exchange membrane 84 may refer to a direction orthogonal to the surface of the ion exchange membrane 84. In the present example, the surface of the ion exchange membrane 84 is the XY plane (see FIG. 2), and the cross sectional direction of the ion exchange membrane 84 is the Y axis direction (see FIG. 2).

In FIG. 6, a position P0 is a position of an anode 80 (see FIG. 2), and a position P4 is a position of a cathode 82 (see FIG. 2). In FIG. 6, a position P1 is a position of a boundary surface between the anode chamber 79 and the ion exchange membrane 84, a position P3 is a position of a boundary surface between the cathode chamber 98 and the ion exchange membrane 84. In FIG. 6, a position P2 is a position where the concentration of the alkali metal in the ion exchange membrane 84 becomes the lowest (a concentration C2 (described later)).

In FIG. 6, a concentration C0 is the concentration of the alkali metal in the anode chamber 79, and a concentration C4 is the concentration of the alkali metal in the cathode chamber 98. In FIG. 6, a concentration C1 is the concentration of the alkali metal at the position P1, and a concentration C3 is the concentration of the alkali metal at the position P3. In FIG. 6, a concentration C2 is the lowest concentration of the alkali metal in the ion exchange membrane 84. As shown in FIG. 6, the concentration of the alkali metal is higher on a cathode 82 side than on an anode 80 side. The concentration of the alkali metal in the ion exchange membrane 84 decreases from the position P1 to the position P2, and increases from the position P2 to the position P3.

If a pH or a concentration of a liquid 70 (see FIG. 1 and FIG. 2), or a pH or a concentration of a liquid 76 (see FIG. 1 and FIG. 2) changes, the concentration profile of the alkali metal shown in FIG. 6 may change. This may change a supply amount of an impurity Im supplied to the ion exchange membrane 84 or an accumulation position of an impurity Im accumulated in the ion exchange membrane 84. This may change a performance decrease rate VL of the ion exchange membrane 84. An estimation unit 10 estimates the performance decrease rate VL based on an actual result value Vd. Therefore, a user of an operation assistance apparatus 100 can recognize a future performance decrease of the ion exchange membrane 84.

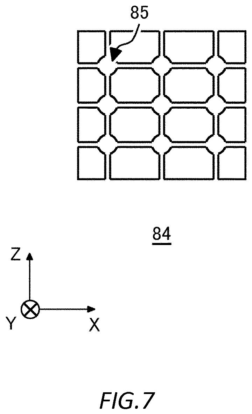

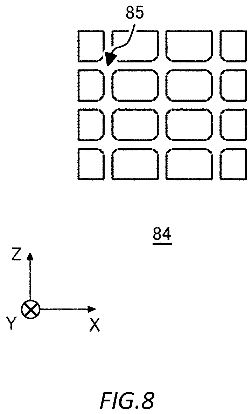

Each of FIG. 7 and FIG. 8 is a figure schematically showing clusters 85 of an ion exchange membrane 84. Each of FIG. 7 and FIG. 8 is a schematic diagram of the clusters 85 for a case where the ion exchange membrane 84 is viewed in a direction from an anode 80 toward a cathode 82 (a thickness direction of the ion exchange membrane 84). FIG. 7 is a schematic diagram of the clusters 85 for a case where a liquid 73 (see FIG. 2) and a liquid 75 (see FIG. 2) are at one temperature T1 in a predetermined temperature range. FIG. 8 is a schematic diagram of the clusters 85 for a case where the liquid 73 and the liquid 75 are at another temperature T2 that is outside the temperature range and is temperature higher than the temperature range.

If temperature of at least one of the liquid 73 or the liquid 75 changes, as shown in FIG. 7 and FIG. 8, a size of a cluster 85 of the ion exchange membrane 84 may change. A change in the size of the cluster 85 may change the concentration profile of the alkali metal shown in FIG. 6. This may change a supply amount of an impurity Im supplied to the ion exchange membrane 84 or an accumulation position of an impurity Im accumulated in the ion exchange membrane 84. This may change a performance decrease rate VL of the ion exchange membrane 84. An estimation unit 10 estimates the performance decrease rate VL based on an actual result value Vd (an actual measurement value of the temperature of the liquid 73 and the liquid 75, in the present example). Therefore, a user of an operation assistance apparatus 100 can recognize a future performance decrease of the ion exchange membrane 84.

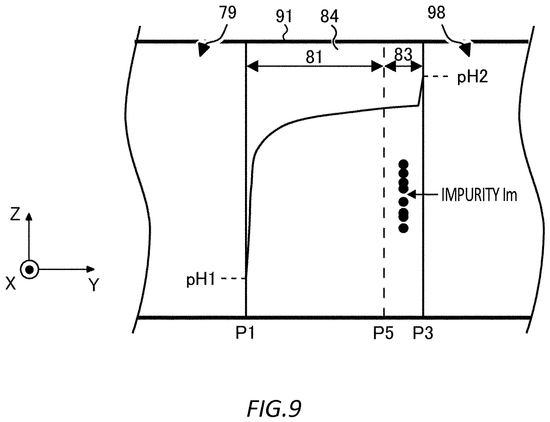

FIG. 9 is a diagram showing one example of a relationship between a position in a cross sectional direction of an ion exchange membrane 84 and a pH. FIG. 9 is one example of a pH profile in the cross sectional direction of the ion exchange membrane 84.

The ion exchange membrane 84 may have a sulfonic acid layer 81 and a carboxylic acid layer 83. The sulfonic acid layer 81 is provided on an anode chamber 79 side of the ion exchange membrane 84. The carboxylic acid layer 83 is provided on a cathode chamber 98 side of the ion exchange membrane 84. A position P1 is, as mentioned above, a position of a boundary surface between an anode chamber 79 and the ion exchange membrane 84. The position P1 is a position of a boundary surface between the anode chamber 79 and the sulfonic acid layer 81. A position P3 is, as mentioned above, a position of a boundary surface between a cathode chamber 98 and the ion exchange membrane 84. The position P3 is a position of a boundary surface between the cathode chamber 98 and the carboxylic acid layer 83. A position where the sulfonic acid layer 81 is in contact with the carboxylic acid layer 83 is referred to as a position P5.

The pH in the cross sectional direction of the ion exchange membrane 84 easily increases from the position P1 to the position P3. The pH at the position P1 is referred to as a pH1, and the pH at the position P3 is referred to as a pH2. A pH value of the pH1 is, for example, 4. A pH value of the pH2 is, for example, 15.

Some of impurities Im that enter the ion exchange membrane 84 from a liquid 73 (see FIG. 2) in the anode chamber 79 may be accumulated in the sulfonic acid layer 81, and others of the impurities Im may pass through the sulfonic acid layer 81. The pH of the sulfonic acid layer 81 tends to be lower than the pH of the carboxylic acid layer 83. Therefore, the others of the impurities Im that have passed through the sulfonic acid layer 81 may be accumulated in the carboxylic acid layer 83.

An impurity Im exhibits a concentration profile in the cross sectional direction of the ion exchange membrane 84. The concentration profile of the impurity Im refers to a relationship between each of the positions in the cross sectional direction of the ion exchange membrane 84 and a concentration of the impurity Im at the each of the positions. The concentration profile of the impurity Im in the cross sectional direction of the ion exchange membrane 84 may depend on a type and the concentration of the impurity Im in at least one of the liquid 73 (see FIG. 2) or a liquid 75 (see FIG. 2) and on an operation condition Cd. Therefore, a shape of the concentration profile of the impurity Im may depend on the type and the concentration of the impurity Im. The concentration profile may have a peak between the position P1 and the position P3 in the cross sectional direction of the ion exchange membrane 84. A position of the peak may depend on the type and the concentration of the impurity Im. The concentration of the impurity Im in the liquid 73 and the liquid 75 may be respectively concentration data on the impurity Im in the liquid 73 and the liquid 75.

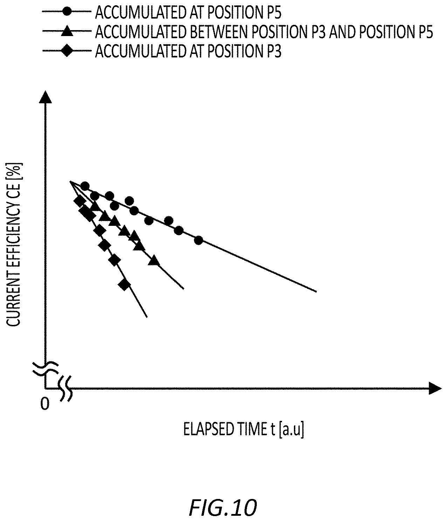

FIG. 10 is a diagram showing one example of a relationship between an elapsed time t and current efficiency CE for each impurity Im. FIG. 10 shows the relationship between the elapsed time t and the current efficiency CE for each of three accumulation positions in a cross sectional direction of an ion exchange membrane 84. It is assumed that the same amount of impurity Im is accumulated at the three accumulation positions. The greater an amount of impurity Im accumulated on a cathode chamber 98 side becomes in the cross sectional direction of the ion exchange membrane 84, the more easily a performance decrease rate VL increases.

An estimation unit 10 (see FIG. 4) may estimate the performance decrease rate VL based on a relationship between a position in the cross sectional direction of the ion exchange membrane 84 and a concentration of the impurity Im accumulated in the ion exchange membrane 84. The estimation unit 10 may estimate the performance decrease rate VL based on a relationship between each of positions in the cross sectional direction of the ion exchange membrane 84 and a concentration of the impurity Im at the each of the positions and on a relationship between the performance decrease rate VL and the elapsed time t shown in FIG. 10.

The relationship between the position in the cross sectional direction of the ion exchange membrane 84 and the concentration of the impurity Im may be an actual result of the relationship between the position in the cross sectional direction of the ion exchange membrane 84 and the concentration of the impurity Im. The actual result of the relationship may be a relationship that is based on an actual result value obtained by actually measuring the concentration of the impurity Im at each of the positions in the cross sectional direction of the ion exchange membrane 84.

The estimation unit 10 (see FIG. 4) may estimate, based on the relationship between the position in the cross sectional direction of the ion exchange membrane 84 and the concentration of the impurity Im, a concentration profile of the impurity Im in the cross sectional direction. If the relationship between the position in the cross sectional direction of the ion exchange membrane 84 and the concentration of the impurity Im is the actual result of the relationship, the relationship between the position in the cross sectional direction of the ion exchange membrane 84 and the concentration of the impurity Im may be discrete in the cross sectional direction. Therefore, the estimation unit 10 may estimate the concentration profile of the impurity Im in the cross sectional direction based on the actual result of the relationship between the position in the cross sectional direction of the ion exchange membrane 84 and the concentration of the impurity Im. The estimation unit 10 may estimate the performance decrease rate VL based on the concentration profile that has been estimated.

The estimation unit 10 (see FIG. 4) may estimate the concentration profile of the impurity Im in the cross sectional direction of the ion exchange membrane 84 based on at least one of a pH of an aqueous solution of an alkali metal chloride or a pH of an aqueous solution of an alkali metal hydroxide. In the present example, the aqueous solution of the alkali metal chloride is a liquid 73 (see FIG. 2), and the aqueous solution of the alkali metal hydroxide is a liquid 75 (see FIG. 2).

The pH profile shown in FIG. 9 may depend on at least one of a pH of the liquid 73 or a pH of the liquid 75. Therefore, a manner in which the impurity Im in the cross sectional direction of the ion exchange membrane 84 is accumulated may depend on at least one of the pH of the liquid 73 or the pH of the liquid 75. Therefore, the estimation unit 10 may estimate the concentration profile of the impurity Im in the cross sectional direction based on at least one of the pH of the liquid 73 or the pH of the liquid 75.

The estimation unit 10 (see FIG. 4) may estimate the performance decrease rate VL based on concentration data on the impurity Im in the aqueous solution of the alkali metal chloride. As mentioned above, the concentration profile of the impurity Im in the cross sectional direction of the ion exchange membrane 84 may depend on a type and the concentration of the impurity Im in at least one of the liquid 73 (see FIG. 2) or the liquid 75 (see FIG. 2). Therefore, a shape of the concentration profile of the impurity Im may depend on the type and the concentration of the impurity Im. Estimation based on the concentration data on the impurity Im makes it easier for the estimation unit 10 to accurately estimate the performance decrease rate VL.

The estimation unit 10 (see FIG. 4) may estimate the performance decrease rate VL based on a position where the concentration profile that has been estimated has a peak. As mentioned above, the concentration profile of the impurity Im may have a peak between a position P1 and a position P3 in the cross sectional direction of the ion exchange membrane 84. Therefore, if the concentration profile of the impurity Im has a peak, the estimation unit 10 may estimate the performance decrease rate VL based on the position where the concentration profile that has been estimated has a peak.

A production parameter regarding a product P is referred to as a production parameter Pr. The production parameter Pr may include at least one of the current efficiency CE of an electrolyzer 90, a decrease rate of the current efficiency CE, a voltage CV of the electrolyzer 90, an increase rate of the voltage CV, a production amount per unit time of the product P, a quality of the product P, or a parameter that may affect the production amount and the quality and is related to running of the electrolyzer 90. The production parameter Pr may include an amount of CO₂ (carbon dioxide) generated as the electrolyzer 90 runs. The CO₂ (carbon dioxide) generated as the electrolyzer 90 runs refers to CO₂ (carbon dioxide) generated by the electrolyzer 90 consuming electricity. The production parameter Pr may include an operation cost of the electrolyzer 90. The operation cost may include an electricity cost associated with operation of the electrolyzer 90 and a cost of the ion exchange membrane 84 for a case where the ion exchange membrane 84 has been replaced.

The estimation unit 10 may estimate, based on the performance decrease rate VL, the production parameter Pr for a case where the electrolyzer 90 is operated under one operation condition Cd. This allows a user of an operation assistance apparatus 100 to recognize the production parameter Pr that reflects a future performance decrease of the ion exchange membrane 84.

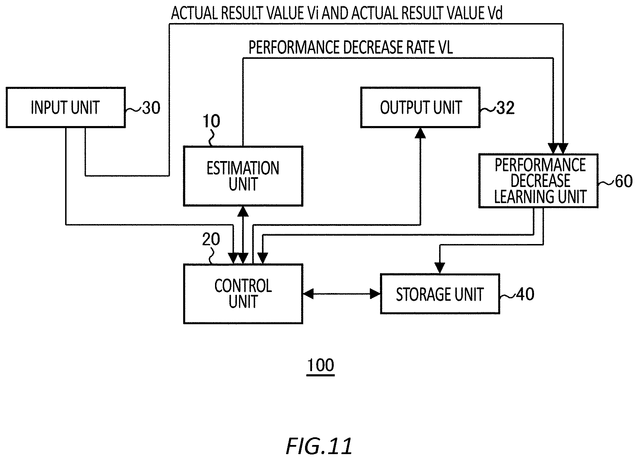

FIG. 11 is a diagram showing another example of a block diagram of an operation assistance apparatus 100 according to one embodiment of the present invention. The operation assistance apparatus 100 in the present example is different from the operation assistance apparatus 100 shown in FIG. 4 in that it further includes a performance decrease learning unit 60. The performance decrease learning unit 60 generates a performance decrease prediction model 62 (described later). The performance decrease prediction model 62 (described later) may be stored in a storage unit 40.

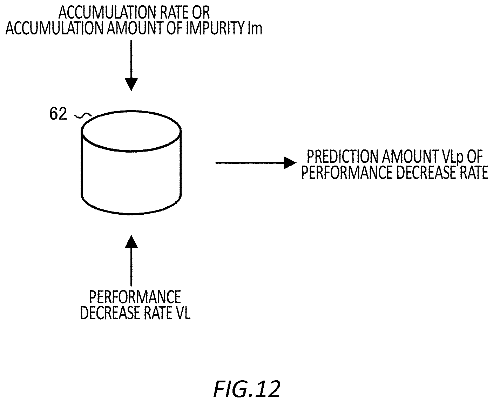

FIG. 12 is a diagram showing one example of a performance decrease prediction model 62. The performance decrease prediction model 62 outputs, by performing machine learning about a relationship between an accumulation rate or an accumulation amount of an impurity Im and a performance decrease rate VL, a prediction amount of the performance decrease rate VL that is based on the relationship between the accumulation rate or the accumulation amount of the impurity Im and the performance decrease rate VL. The prediction amount of the performance decrease rate is referred to as a prediction amount VLp. The performance decrease prediction model 62 may output the prediction amount VLp for each impurity Im by performing machine learning about a relationship between the accumulation rate or the accumulation amount of the impurity Im for each impurity Im and the performance decrease rate VL for each impurity Im.

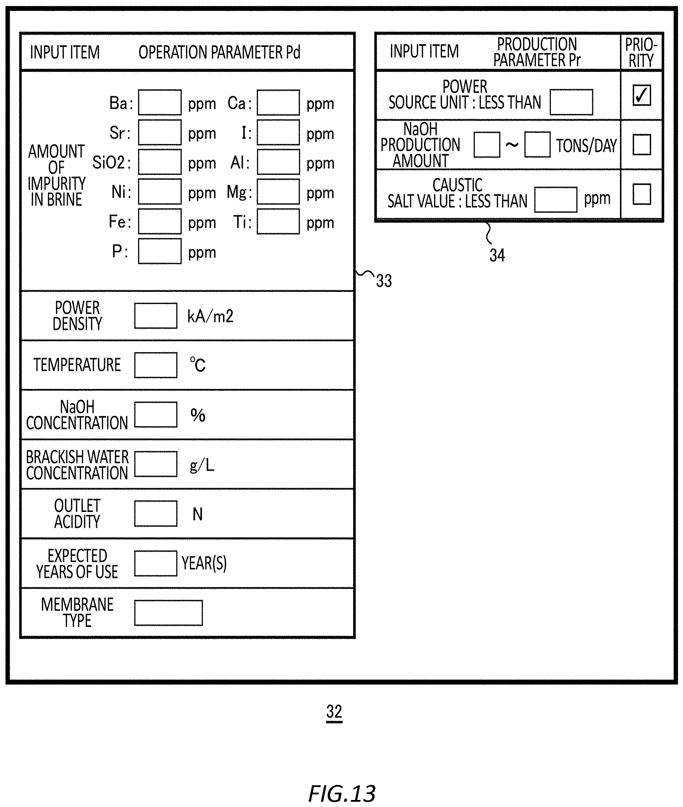

FIG. 13 is a diagram showing one example of an output manner in an output unit 32 (see FIG. 11). The output unit 32 in the present example is a display. A parameter regarding an operation condition Cd is referred to as an operation parameter Pd. The output unit 32 in the present example displays an operation parameter Pd display section 33 and a production parameter Pr display section 34. A user of an operation assistance apparatus 100 may input operation parameters Pd and production parameters Pr by using an input unit 30 (see FIG. 11).

The user of the operation assistance apparatus 100 may designate, among the operation parameters Pd, one or more operation parameters Pd that he/she desires to fix while an electrolyzer 90 is running. A performance decrease prediction model 62 (see FIG. 12) may output, by performing machine learning about a relationship between an accumulation rate or an accumulation amount of an impurity Im and the operation condition Cd, and a performance decrease rate VL, a prediction amount VLp of the performance decrease rate VL that is based on the relationship between the accumulation rate or the accumulation amount of the impurity Im and the operation condition Cd, and the performance decrease rate VL, for each of a plurality of operation conditions Cd. The plurality of operation conditions Cd refer to a first case and a second case of an operation parameter Pd that the user of the operation assistance apparatus 100 desires to fix, if the operation parameters Pd are inputted in the operation parameter Pd display section 33. The first case may include one or more of the operation parameters Pd displayed in the operation parameter Pd display section 33, and the second case may include one or more of the operation parameters Pd that are different from the one or more of the operation parameters Pd included in the first case. This allows the user of the operation assistance apparatus 100 to simulate the prediction amount VLp for a case where the operation condition Cd is changed in various ways.

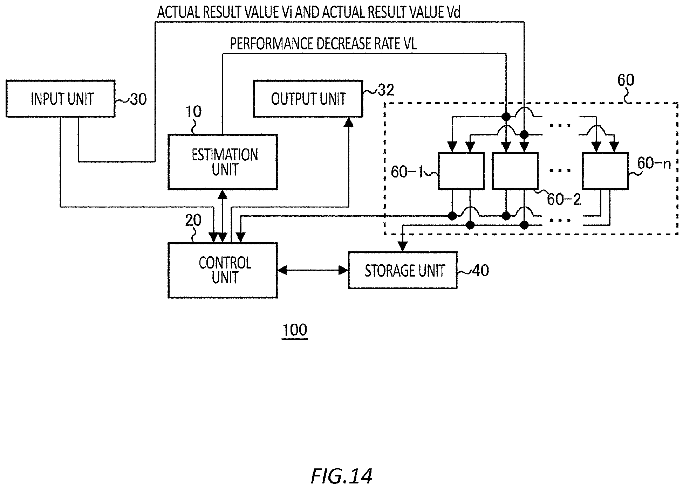

FIG. 14 is a diagram showing another example of a block diagram of an operation assistance apparatus 100 according to one embodiment of the present invention. The operation assistance apparatus 100 in the present example is different from the operation assistance apparatus 100 shown in FIG. 11 in that it includes a plurality of performance decrease learning units 60 (performance decrease learning units 60-1 to 60-n).

Each of the plurality of performance decrease learning units 60 may generate a performance decrease prediction model 62 (see FIG. 12) for each of types of a plurality of ion exchange membranes 84. A type of an ion exchange membrane 84 may be a physical amount which may differ from one individual ion exchange membrane 84 to another, such as a density of an anion group 86 (see FIG. 3) in the ion exchange membrane 84 or a thickness of the ion exchange membrane 84. The type of the ion exchange membrane 84 may be a so-called lot number for each individual ion exchange membrane. The type of the ion exchange membrane 84 may be a type of the anion group 86 (see FIG. 3).

A manner in which performance of the ion exchange membrane 84 decreases may differ depending on the type of the ion exchange membrane 84. As a result of the performance decrease prediction model 62 being generated for each of the types of the ion exchange membranes 84, each of performance decrease prediction models 62 can output a more appropriate prediction amount VLp that reflects the type of the ion exchange membrane 84.

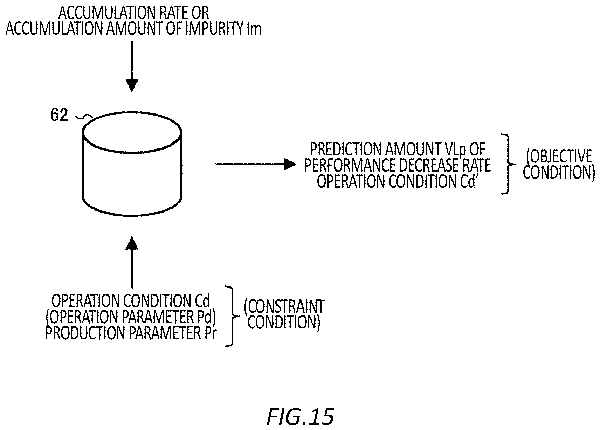

FIG. 15 is a diagram showing one example of prediction of a prediction amount VLp or estimation of an operation condition Cd by using a performance decrease prediction model 62. It is assumed that the performance decrease prediction model 62 in the present example has performed machine learning about a relationship between an accumulation rate or an accumulation amount of an impurity Im and an actual result value Vd of the operation condition Cd, and a performance decrease rate VL.

The performance decrease prediction model 62 may estimate, based on the accumulation rate or the accumulation amount of the impurity Im and on a production parameter Pr (see FIG. 13), the operation condition Cd that satisfies the production parameter Pr. The performance decrease prediction model 62 may estimate, based on the accumulation rate or the accumulation amount of the impurity Im and on a production parameter Pr, the operation condition Cd that satisfies the production parameter Pr, for each type of the impurity Im. The performance decrease prediction model 62 may estimate, if the accumulation rate or the accumulation amount of the impurity Im and a production parameter Pr are inputted to the performance decrease prediction model 62, the operation condition Cd that satisfies the production parameter Pr. The operation condition Cd is referred to as an operation condition Cd'. The performance decrease prediction model 62 may estimate the operation condition Cd', and predict the prediction amount VLp.

In the present example, the performance decrease prediction model 62 outputs, as an objective condition, an optimal operation condition Cd' for a case where the accumulation rate or the accumulation amount of the impurity Im is used as an explanatory variable and the production parameter Pr is used as a constraint condition. A user of an operation assistance apparatus 100 may designate, by using an input unit 30 (see FIG. 11), a production parameter Pr that he/she desires to satisfy among production parameters Pr displayed in a production parameter Pr display section 34 (see FIG. 13), and input, by using the input unit 30, a numerical value related to the production parameter Pr that he/she desires to satisfy. This allows the user of the operation assistance apparatus 100 to recognize the optimal operation condition Cd' for a case where the production parameter Pr is used as the constraint condition.

The constraint condition may further include an operation condition Cd that the user of the operation assistance apparatus 100 desires to satisfy. The user of the operation assistance apparatus 100 may designate, by using the input unit 30 (see FIG. 11), an operation parameter Pd that he/she desires to satisfy among operation parameters Pd displayed in an operation parameter Pd display section 33 in FIG. 13, and input, by using the input unit 30, a numerical value related to the operation parameter Pd that he/she desires to satisfy. This allows the user of the operation assistance apparatus 100 to recognize an optimal operation condition Cd' for a case where the production parameter Pr and the operation parameter Pd are used as constraint conditions. The operation condition Cd' may be different from the operation parameter Pd.

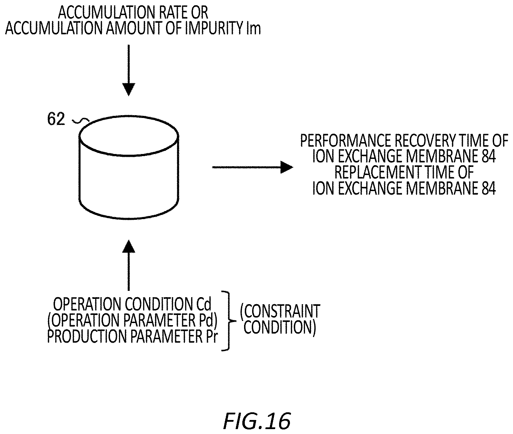

FIG. 16 is a diagram showing one example of estimation of a recovery time of performance of an ion exchange membrane 84 or a replacement time of an ion exchange membrane 84 by using a performance decrease prediction model 62. In the prediction of the prediction amount VLp or the estimation of the operation condition Cd shown in FIG. 15, if there is no operation condition Cd' that satisfies a production parameter Pr, the performance decrease prediction model 62 may estimate at least one of the recovery time of the performance of the ion exchange membrane 84 or the replacement time of the ion exchange membrane 84. This allows a user of an operation assistance apparatus 100 to previously recognize at least one of at least one of the recovery time of the performance of the ion exchange membrane 84 or the replacement time of the ion exchange membrane 84.

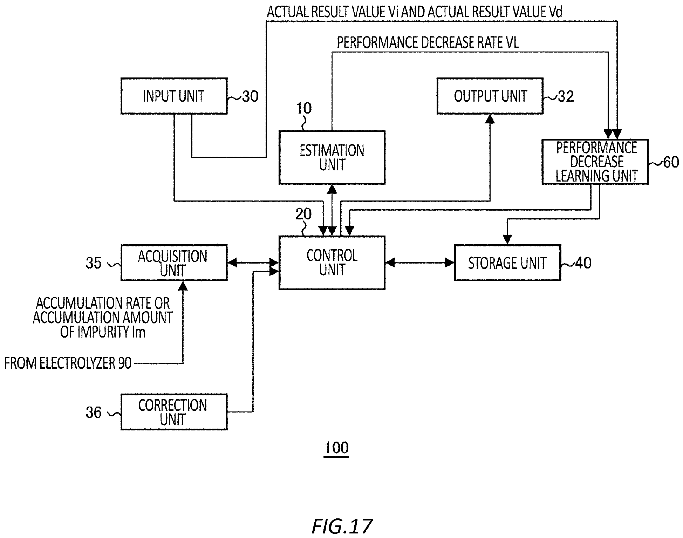

FIG. 17 is a diagram showing another example of a block diagram of an operation assistance apparatus 100 according to one embodiment of the present invention. The operation assistance apparatus 100 in the present example is different from the operation assistance apparatus 100 shown in FIG. 11 in that it further includes an acquisition unit 35 and a correction unit 36.

The acquisition unit 35 acquires an accumulation rate or an accumulation amount of an impurity Im for a case where an electrolyzer 90 is operated under one operation condition Cd. The one operation condition Cd may refer to an operation condition Cd designated by an user of the operation assistance apparatus 100. The case where the electrolyzer 90 is operated under one operation condition Cd may refer to a case where the electrolyzer 90 is running under the one operation condition Cd. The acquisition unit 35 may acquire the accumulation rate or the accumulation amount of the impurity Im in real time while the electrolyzer 90 is running under one operation condition Cd.

The correction unit 36 corrects an accumulation rate or an accumulation amount of an impurity Im based on the accumulation rate or the accumulation amount of the impurity Im acquired by the acquisition unit 35. The correction unit 36 may correct accumulation rates or accumulation amounts of one or more types of impurities Im based on the accumulation rate or the accumulation amount of the impurity Im acquired by the acquisition unit 35. The accumulation rates of the impurities Im are accumulation rates or accumulation amounts of one or more impurities Im estimated by an estimation unit 10. The accumulation rates or the accumulation amounts of the impurities Im estimated by the estimation unit 10 may be different from the accumulation rate or the accumulation amount acquired by the acquisition unit 35. The accumulation rates or the accumulation amounts estimated by the estimation unit 10 are estimation values that are based on a past actual result value Vi of the accumulation rate or the accumulation amount. If the acquisition unit 35 acquires the accumulation rate or the accumulation amount in real time, the accumulation rate or the accumulation amount is a current measurement value. Therefore, the accumulation rate or the accumulation amount acquired by the acquisition unit 35 may reflect a current state of an ion exchange membrane 84 more than the accumulation rates or the accumulation amounts estimated by the estimation unit 10. In the present example, the correction unit 36 corrects the accumulation rates or the accumulation amounts of the impurities Im estimated by the estimation unit 10, based on the accumulation rate or the accumulation amount acquired by the acquisition unit 35. Therefore, the accumulation rates or the accumulation amounts that have been estimated easily reflect the current state of the ion exchange membrane 84 more.

The estimation unit 10 may estimate a performance decrease rate VL based on the accumulation rates or the accumulation amounts of the impurities Im corrected by the correction unit 36. A performance decrease prediction model 62 (see FIG. 12) may perform machine learning about a relationship between an actual result value Vd of the operation condition Cd and the accumulation rates or the accumulation amounts of the impurities Im corrected by the correction unit 36, and the performance decrease rate VL.

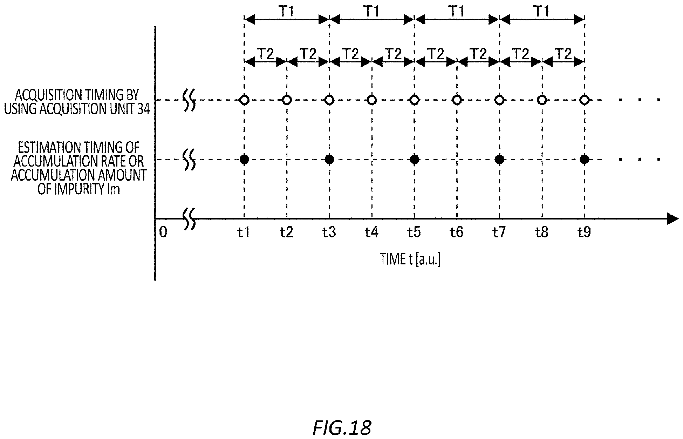

FIG. 18 is a diagram showing one example of acquisition timing of an accumulation rate or an accumulation amount of an impurity Im by using an acquisition unit 35 and acquisition timing of an accumulation rate or an accumulation amount of an impurity Im by using an estimation unit 10. In FIG. 18, the acquisition timing of the accumulation rate or the accumulation amount of the impurity Im by using the acquisition unit 35 is indicated by a white circle, and the acquisition timing of the accumulation rate or the accumulation amount of the impurity Im is indicated by a black circle.

In the present example, the estimation unit 10 estimates accumulation rates or accumulation amounts of one or more impurities Im in a first cycle T1, and the acquisition unit 35 acquires an accumulation rate or an accumulation amount of an impurity Im in a second cycle T2. Estimating the accumulation rates or the accumulation amounts of the impurities Im in the first cycle T1 may refer to estimating, by the estimation unit 10 (see FIG. 17), the accumulation rates or the accumulation amounts of the impurities Im in the first cycle T1 based on an actual result value Vi stored in a storage unit 40 (see FIG. 17). Acquiring the accumulation rate or the accumulation amount of the impurity Im in the second cycle T2 may refer to acquiring, by the acquisition unit 35, acquiring the accumulation rate or the accumulation amount of the impurity Im in the second cycle T2 while the electrolyzer 90 is running. The estimation unit 10 may estimate accumulation rates or accumulation amounts of one or more types of impurities Im in the first cycle T1. The acquisition unit 35 may acquire accumulation rates or accumulation amounts of one or more types of impurities Im in the second cycle T2.

The second cycle T2 may be shorter than the first cycle T1. A correction unit 36 (see FIG. 17) may correct the accumulation rates or the accumulation amounts of the impurities Im estimated in the first cycle T1, based on the accumulation rates or the accumulation amounts of the impurities Im acquired in the second cycle T2. As mentioned above, the accumulation rates or the accumulation amounts acquired by the acquisition unit 35 may reflect a current state of an ion exchange membrane 84 more than the accumulation rates or the accumulation amounts estimated by the estimation unit 10 (see FIG. 17). Therefore, the second cycle T2 being shorter than the first cycle T1 makes it easier for the correction unit 36 to correct the accumulation rates or the accumulation amounts of the impurities Im to the accumulation rates or the accumulation amounts that reflect the current state of the ion exchange membrane 84 more.

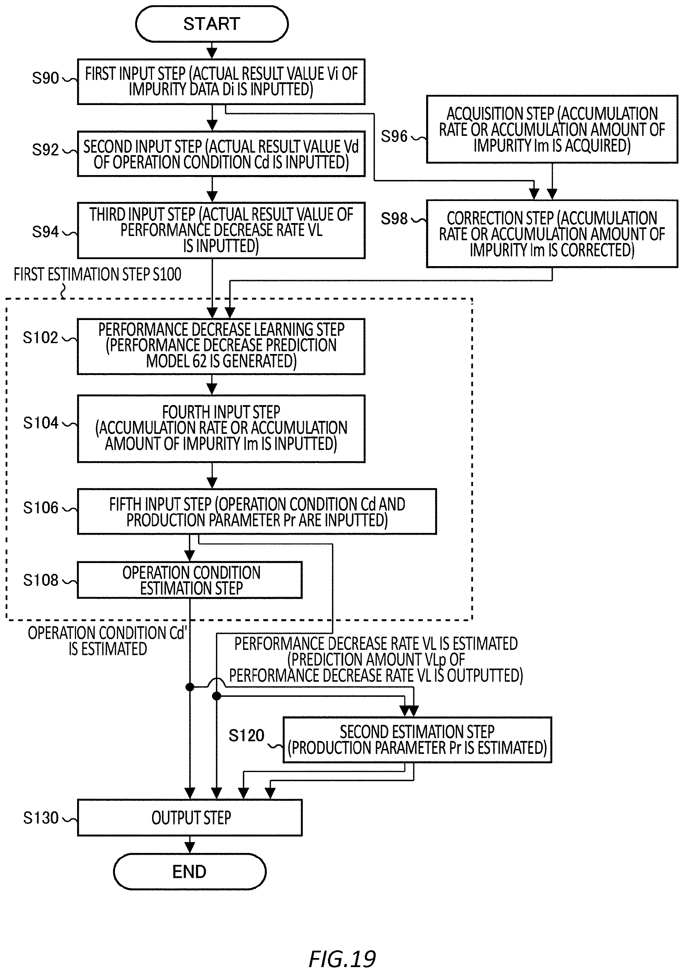

FIG. 19 is a flowchart showing one example of an operation assistance method according to one embodiment of the present invention. The operation assistance method according to one embodiment of the present invention assists operation of an electrolyzer 90 (see FIG. 1).

The operation assistance method according to one embodiment of the present invention includes a first estimation step S100. The operation assistance method may include a first input step S90, a second input step S92, and a third input step S94.

The first input step S90 is a step in which an actual result value Vi of an impurity data Di regarding an accumulation rate of an impurity Im in an ion exchange membrane 84 in the electrolyzer 90 is inputted to an operation assistance apparatus 100 (see FIG. 11). The first input step S90 may be a step in which actual result values Vi' of accumulation rates or actual result values Vi' of accumulation amounts of one or more elements constituting one or more impurities Im accumulated in the ion exchange membrane 84 are inputted to the operation assistance apparatus 100. The second input step S92 is a step in which an actual result value Vd of an operation condition Cd is inputted to the operation assistance apparatus 100. The third input step S94 is a step in which an actual result value of a performance decrease rate VL is inputted to the operation assistance apparatus 100.

The actual result value Vi, the actual result values Vi', the actual result value Vd, and the actual result value of the performance decrease rate VL may be inputted by an input unit 30 (see FIG. 11). The first input step S90 to the third input step S94 may be performed in this order, or may not be performed in this order.

The first estimation step S100 is a step in which an estimation unit 10 (see FIG. 4) estimates the performance decrease rate VL of the ion exchange membrane 84 based on the actual result value Vi. The first estimation step S100 may be a step in which the estimation unit 10 estimates one or more impurities Im based on the actual result values Vi', and estimates the performance decrease rate VL of the ion exchange membrane 84 based on accumulation rates or accumulation amounts of the one or more impurities Im that have been estimated. The first estimation step S100 may be a step in which the estimation unit 10, estimates types of one or more impurities Im based on the actual result values Vi', and estimates the performance decrease rate VL of the ion exchange membrane 84 based on accumulation rates or accumulation amounts of one or more types of impurities Im that have been estimated. The first estimation step S100 may be a step in which the estimation unit 10 estimates the performance decrease rate VL based on the actual result value Vd of the operation condition Cd of the electrolyzer 90 (see FIG. 1).

The first estimation step S100 may be a step in which the estimation unit 10 (see FIG. 4) estimates the performance decrease rate VL based on a relationship between a position in a cross sectional direction of the ion exchange membrane 84 and a concentration of the impurity Im accumulated in the ion exchange membrane 84. The first estimation step S100 may be a step in which the estimation unit 10 estimates a concentration profile of the impurity Im in the cross sectional direction of the ion exchange membrane 84 based on the relationship between the position in the cross sectional direction of the ion exchange membrane 84 and the concentration of the impurity Im accumulated in the ion exchange membrane 84, and estimates the performance decrease rate VL based on the concentration profile that has been estimated. The first estimation step S100 may be a step in which the estimation unit 10 estimates the performance decrease rate VL based on a position in the cross sectional direction of the ion exchange membrane 84 where the concentration profile that has been estimated has a peak.

The first estimation step S100 may be a step in which the estimation unit 10 (see FIG. 4) estimates a concentration profile of the impurity Im in the cross sectional direction of the ion exchange membrane 84 based on at least one of a pH of an aqueous solution of an alkali metal chloride or a pH of an aqueous solution of an alkali metal hydroxide, and estimates the performance decrease rate VL based on the concentration profile that has been estimated. The first estimation step S100 may be a step in which the estimation unit 10 estimates the performance decrease rate VL based on concentration data on the impurity Im in the aqueous solution of the alkali metal chloride.

The impurity data Di may include concentration data on the impurity Im in a liquid 73. The first estimation step S100 may be a step in which the estimation unit 10 (see FIG. 4) estimates the performance decrease rate VL based on the concentration data on the impurity Im. The first estimation step S100 may be a step in which the estimation unit 10 estimates one or more impurities Im based on the actual result values Vi', and estimates the performance decrease rate VL of the ion exchange membrane 84 based on accumulation rates or accumulation amounts of the one or more impurities Im that have been estimated and on the concentration data on the impurity Im in the liquid 73.

The first estimation step S100 may be a step in which the estimation unit 10 (see FIG. 4) estimates the performance decrease rate VL based on the actual result value Vd of the operation condition Cd of the electrolyzer 90. The first estimation step S100 may be a step in which the estimation unit 10 estimates the performance decrease rate VL based on a relationship between an accumulation rate or an accumulation amount of the impurity Im accumulated in the ion exchange membrane 84 and the performance decrease rate VL.

The first estimation step S100 may include a performance decrease learning step S102 in which a performance decrease learning unit 60 (FIG. 11) generates a performance decrease prediction model 62 (see FIG. 12). The performance decrease prediction model 62 outputs, by performing machine learning about the relationship between the accumulation rate or the accumulation amount of the impurity Im and the performance decrease rate VL, a prediction amount VLp of the performance decrease rate VL of the ion exchange membrane 84 that is based on the relationship between the accumulation rate or the accumulation amount of the impurity Im and the performance decrease rate VL.

The first estimation step S100 may include a fourth input step S104 and a fifth input step S106. The fourth input step S104 is a step in which the accumulation rate or the accumulation amount of the impurity Im in the ion exchange membrane 84 is inputted to the performance decrease prediction model 62. The fifth input step S106 is a step in which the operation condition Cd and a production parameter Pr are inputted to the performance decrease prediction model 62.

The accumulation rate or the accumulation amount of the impurity Im in the fourth input step S104 as well as the actual result value Vd and the actual result value of the performance decrease rate VL in the fifth input step S106 may be inputted by the input unit 30 (see FIG. 11). In the operation assistance method, the fourth input step S104 may be followed by the fifth input step S106, or the fifth input step S106 may be followed by the fourth input step S104.

The first estimation step S100 may further include an operation condition estimation step S108. The operation condition estimation step S108 is a step in which the performance decrease prediction model 62 (see FIG. 15) estimates, based on the accumulation rate or the accumulation amount of the impurity Im and on the production parameter Pr, the operation condition Cd of the electrolyzer 90 that satisfies the production parameter Pr. The production parameter Pr may be a production parameter Pr that a user of the operation assistance method desires to satisfy among production parameters Pr displayed in a production parameter Pr display section 34 (see FIG. 13).

The operation assistance method may further include a second estimation step S120. The second estimation step S120 is a step in which the estimation unit 10 (see FIG. 4) estimates, based on the performance decrease rate VL estimated in the first estimation step S100, the production parameter Pr (see FIG. 13) for a case where the electrolyzer 90 is operated under one operation condition Cd.

The operation assistance method may further include an output step S130 in which the output unit 32 (see FIG. 11) outputs at least one of an operation condition Cd' or the performance decrease rate VL estimated in the first estimation step S100. The output step S130 may be a step in which the output unit 32 further outputs the production parameter Pr estimated in the second estimation step S120. This allows the user of the operation assistance method to recognize at least one of the performance decrease rate VL, the operation condition Cd', or the production parameter Pr that has been estimated. The output step S130 may be a step in which the output unit 32 outputs a state of at least one of the ion exchange membrane 84, an anode 80, or a cathode 82 to a user of the operation assistance apparatus 100.

The operation assistance method may further include an acquisition step S96 and a correction step S98. The acquisition step S96 is a step in which an acquisition unit 35 (see FIG. 17) acquires an accumulation rate or an accumulation amount of the impurity Im for a case where the electrolyzer 90 (see FIG. 1) is operated under one operation condition Cd. The correction step S98 is a step in which a correction unit 36 (see FIG. 17) corrects the accumulation rates or the accumulation amounts of the one or more impurities Im based on the accumulation rate or the accumulation amount of the impurity Im acquired in the acquisition step S96. The accumulation rates or the accumulation amounts of the impurities Im are the accumulation rates or the accumulation amounts of the one or more impurities Im estimated in the first estimation step S100. The correction step S98 may be a step in which the correction unit 36 corrects the accumulation rates or the accumulation amounts of the one or more types of impurities Im based on the accumulation rate or the accumulation amount of the impurity Im acquired in the acquisition step S96.

The first estimation step S100 may be a step in which the estimation unit 10 (see FIG. 17) estimates the performance decrease rate VL based on the accumulation rates or the accumulation amounts of the impurities Im corrected in the correction step S98. The performance decrease learning step S102 may be a step in which the performance decrease prediction model 62 (see FIG. 12) performs machine learning about a relationship between the actual result value Vd of the operation condition Cd inputted in the second input step S92 and the accumulation rates or the accumulation amounts of the impurities Im corrected in the correction step S98, and the performance decrease rate VL.

Various embodiments of the present invention may be described with reference to flowcharts and block diagrams. In the various embodiments of the present invention, a block may represent (1) a stage of a process where operations are executed or (2) a section of an apparatus having a role for executing operations.

Certain stages may be executed by a dedicated circuit, a programmable circuit, or a processor. Certain sections may be implemented by a dedicated circuit, a programmable circuit, or a processor. The programmable circuit and the processor may be supplied together with a computer readable instruction. The computer readable instruction may be stored on a computer readable medium.

The dedicated circuit may include at least one of a digital hardware circuit and an analog hardware circuit. The dedicated circuit may include at least one of an integrated circuit (IC) and a discrete circuit. The programmable circuit may a hardware circuit including include logical AND, logical OR, logical XOR, logical NAND, logical NOR, or another logical operation. The programmable circuit may include a reconfigurable hardware circuit including a flip-flop, a register, a memory element such as a field programmable gate array (FPGA) and a programmable logic array (PLA), and the like.

The computer readable medium may include any tangible device that can store instructions for execution by a suitable device. Since the computer readable medium includes the tangible device, the computer readable medium having the instruction stored on the device will include an article of manufacture including an instruction that may be executed in order to create means to execute an operation designated by a flowchart or a block diagram.

The computer readable medium may be, for example, an electronic storage medium, a magnetic storage medium, an optical storage medium, an electromagnetic storage medium, a semiconductor storage medium, or the like. More specifically, for example, the computer readable medium may be a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer readable instruction may include any of an assembler instruction, an instruction-set-architecture (ISA) instruction, a machine instruction, a machine dependent instruction, a microcode, a firmware instruction, state-setting data, a source code, and an object code. The source code and the object code may be described in any combination of one or more programming languages including an object oriented programming language and a conventional procedural programming language in related art. The object oriented programming language may be, for example, Smalltalk (registered trademark), JAVA (registered trademark), C++, or the like. The procedural programming language may be, for example, a "C" programming language.

The computer readable instruction may be provided to a general purpose computer, a special purpose computer, or a processor or a programmable circuit of another programmable data processing apparatus locally or via a local area network (LAN) or a wide area network (WAN) such as the Internet or the like. The general purpose computer, the special purpose computer, or the processor or the programmable circuit of another programmable data processing apparatus may execute the computer readable instruction in order to create means for executing operations designated in the flowchart shown in FIG. 19 or the block diagrams shown in FIG. 4, FIG. 11, FIG. 14, and FIG. 17. The processor may be, for example, a computer processor, a processing unit, a microprocessor, a digital signal processor, a controller, a microcontroller, or the like.

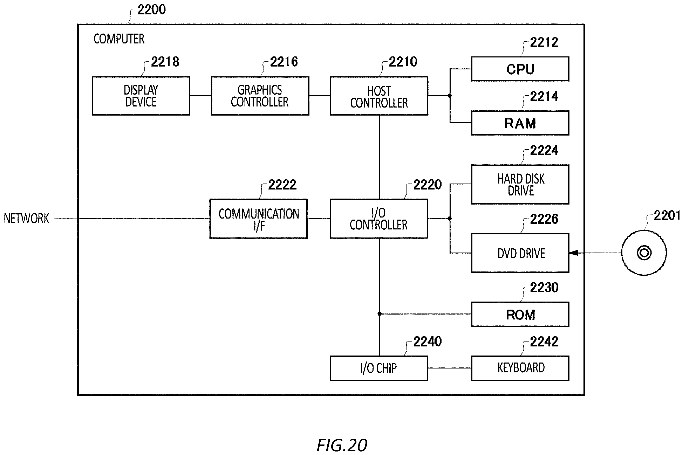

FIG. 20 is a diagram showing one example of a computer 2200 in which an operation assistance apparatus 100 according to an embodiment of the present invention may be entirely or partially embodied. A program installed in the computer 2200 can cause the computer 2200 to function as operations associated with the operation assistance apparatus 100 according to an embodiment of the present invention or one or more sections of the operation assistance apparatus 100 or to execute the operations or the one or more sections, or can cause the computer 2200 to execute each of stages (see FIG. 19) according to the operation assistance method of the present invention. The program may be executed by the CPU 2212 in order to cause the computer 2200 to execute certain operations associated with some or all of the blocks in the flowchart (FIG. 19) and the block diagrams (FIG. 4, FIG. 11, FIG. 14, and FIG. 17) described in the present specification.

The computer 2200 according to the present embodiment includes a CPU 2212, a RAM 2214, a graphics controller 2216, and a display device 2218. The CPU 2212, the RAM 2214, the graphics controller 2216, and the display device 2218 are mutually connected by a host controller 2210. The computer 2200 further includes input/output units such as a communication interface 2222, a hard disk drive 2224, a DVD-ROM drive 2226, and an IC card drive. The communication interface 2222, the hard disk drive 2224, the DVD-ROM drive 2226, the IC card drive, and the like are connected to the host controller 2210 via an input/output controller 2220. The computer further includes legacy input/output units such as a ROM 2230 and a keyboard 2242. The ROM 2230, the keyboard 2242, and the like are connected to the input/output controller 2220 via an input/output chip 2240.

The CPU 2212 operates in accordance with programs stored in the ROM 2230 and the RAM 2214, thereby controlling each unit. The graphics controller 2216 acquires image data generated by the CPU 2212 on a frame buffer or the like provided in the RAM 2214 or in the RAM 2214 itself, to cause the image data to be displayed in the display device 2218.

The communication interface 2222 communicates with another electronic device via a network. The hard disk drive 2224 stores programs and data used by the CPU 2212 in the computer 2200. The DVD-ROM drive 2226 reads the programs or the data from the DVD-ROM 2201, and provides the read programs or data to the hard disk drive 2224 via the RAM 2214. The IC card drive reads programs and data from an IC card, or writes programs and data to an IC card.

The ROM 2230 stores a boot program or the like executed by the computer 2200 at a time of activation, or a program depending on the hardware of the computer 2200. The input/output chip 2240 may connect various input/output units via a parallel port, a serial port, a keyboard port, a mouse port, or the like to the input/output controller 2220.

Programs are provided by a computer readable medium such as the DVD-ROM 2201 or the IC card. The programs are read from the computer readable medium, are installed in the hard disk drive 2224, the RAM 2214, or the ROM 2230 which is also an example of the computer readable medium, and are executed by the CPU 2212. The information processing described in these programs is read by the computer 2200, and provides cooperation between the programs and the various types of hardware resources. An apparatus or a method may be constituted by realizing an operation or processing of information in accordance with usage of the computer 2200.

For example, if communication is executed between the computer 2200 and an external device, the CPU 2212 may execute a communication program loaded onto the RAM 2214, to instruct communication processing to the communication interface 2222, based on the processing described in the communication program. The communication interface 2222, under control by the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

The CPU 2212 may cause all or a necessary portion of a file or a database to be read into the RAM 2214, the file or the database stored in an external recording medium such as the hard disk drive 2224, the DVD-ROM drive 2226 (DVD-ROM 2201), the IC card, or the like. The CPU 2212 may execute various types of processing on the data on the RAM 2214. The CPU 2212 may next write the processed data back to the external recording medium.

Various types of information, such as various types of programs, data, tables, and databases, may be stored in the recording medium to undergo information processing. The CPU 2212 may execute various types of processing on the data read from the RAM 2214, which includes various types of operations, information processing, condition judging, conditional branch, unconditional branch, information search or replacement, or the like, as described throughout the present disclosure and designated by an instruction sequence of programs. The CPU 2212 may write the result back to the RAM 2214.

The CPU 2212 may search for information in a file, a database, or the like in the recording medium. For example, if a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, read the attribute value of the second attribute stored in the entry, and read a second attribute value, to acquire the attribute value of the second attribute associated with the first attribute satisfying a predetermined condition.

The program mentioned above or a software module may be stored in the computer readable media of the computer 2200 or on the computer 2200. A recording medium such as a hard disk or a RAM provided in a server system connected to a dedicated communication network or the Internet can be used as the computer readable media. The program may be provided to the computer 2200 by the recording medium.

While the present invention has been described by way of the embodiments, the technical scope of the present invention is not limited to the scope described in the above-described embodiments. It is apparent to persons skilled in the art that various alterations or improvements can be made to the above-described embodiments. It is also apparent from the described scope of the claims that the embodiments added with such alterations or improvements can be included the technical scope of the present invention.

The operations, procedures, steps, stages, or the like of each process performed by a device, system, program, and method shown in the claims, embodiments, or diagrams can be realized in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.
1. An operation assistance apparatus comprising an estimation unit which estimates a performance decrease rate of an ion exchange membrane in an electrolyzer, wherein
   the estimation unit estimates the performance decrease rate based on a relationship between a position in a cross sectional direction of the ion exchange membrane and concentrations of one or more impurities accumulated in the ion exchange membrane.

### EXPLANATION OF REFERENCES

10: estimation unit; 20: control unit; 30: input unit; 32: output unit; 33: operation parameter Pd display section; 34: production parameter Pr display section; 35: acquisition unit; 36: correction unit; 40: storage unit; 60: performance decrease learning unit; 62: performance decrease prediction model; 70: liquid; 71: cation; 72: liquid; 73: liquid; 74: liquid; 75: liquid; 76: liquid; 77: gas; 78: gas; 79: anode chamber; 80: anode; 81: sulfonic acid layer; 82: cathode; 83: carboxylic acid layer; 84: ion exchange membrane; 85: cluster; 86: anion group; 88: bottom surface; 89: ceiling surface; 90: electrolyzer; 91: electrolysis cell; 92: induction piping; 93: induction piping; 94: discharge piping; 95: discharge piping; 98: cathode chamber; 100: operation assistance apparatus; 200: electrolytic apparatus; 300: operation assistance system; 2200: computer; 2201: DVD-ROM; 2210: host controller; 2212: CPU; 2214: RAM; 2216: graphics controller; 2218: display device; 2220: input/output controller; 2222: communication interface; 2224: hard disk drive; 2226: DVD-ROM drive; 2230: ROM; 2240: input/output chip; and 2242: keyboard.

## Claims

1. An operation assistance apparatus comprising an estimation unit which estimates, based on an actual result value of impurity data regarding an accumulation rate of an impurity in an ion exchange membrane in an electrolyzer, a performance decrease rate of the ion exchange membrane.

2. The operation assistance apparatus according to claim 1, wherein
the actual result value of the impurity data includes actual result values of accumulation rates or actual result values of accumulation amounts of one or more elements constituting one or more impurities including the impurity accumulated in the ion exchange membrane, and
the estimation unit estimates the one or more impurities including the impurity based on the actual result values of the accumulation rates or the actual result values of the accumulation amounts of the one or more elements, and estimates the performance decrease rate of the ion exchange membrane based on accumulation rates or accumulation amounts of the one or more impurities including the impurity that have been estimated.

3. The operation assistance apparatus according to claim 1 or 2, wherein the estimation unit estimates the performance decrease rate based on a relationship between a position in a cross sectional direction of the ion exchange membrane and a concentration of the impurity accumulated in the ion exchange membrane.

4. The operation assistance apparatus according to claim 3, wherein the estimation unit estimates a concentration profile of the impurity in the cross sectional direction based on the relationship between the position and the concentration of the impurity, and estimates the performance decrease rate based on the concentration profile that has been estimated.

5. The operation assistance apparatus according to claim 4, wherein
the electrolyzer has an anode chamber and a cathode chamber separated by the ion exchange membrane,
an aqueous solution of an alkali metal chloride is induced into the anode chamber, and an aqueous solution of an alkali metal hydroxide is discharged from the cathode chamber, and
the estimation unit estimates the concentration profile of the impurity in the cross sectional direction based on at least one of a pH of the aqueous solution of the alkali metal chloride or a pH of the aqueous solution of the alkali metal hydroxide.

6. The operation assistance apparatus according to claim 5, wherein the estimation unit estimates the performance decrease rate based on concentration data on the impurity in the aqueous solution of the alkali metal chloride.

7. The operation assistance apparatus according to any one of claims 4 to 6, wherein the estimation unit estimates the performance decrease rate based on the position where the concentration profile that has been estimated has a peak.

8. The operation assistance apparatus according to any one of claims 1 to 7, wherein the actual result value of the impurity data is actual analysis data on the ion exchange membrane.

9. The operation assistance apparatus according to any one of claims 1 to 4, wherein
the electrolyzer has an anode chamber and a cathode chamber separated by the ion exchange membrane,
an aqueous solution of an alkali metal chloride is induced into the anode chamber,
the impurity data includes concentration data on an impurity in the aqueous solution of the alkali metal chloride, and
the estimation unit estimates the performance decrease rate of the ion exchange membrane based on the concentration data on the impurity.

10. The operation assistance apparatus according to any one of claims 1 to 9, wherein the estimation unit estimates, based on the performance decrease rate, a production parameter for a case where the electrolyzer is operated under one operation condition, the production parameter being related to a product produced by the electrolyzer.

11. The operation assistance apparatus according to any one of claims 1 to 10, wherein the estimation unit estimates the performance decrease rate based on an actual result value of an operation condition of the electrolyzer.

12. The operation assistance apparatus according to any one of claims 1 to 11, wherein the estimation unit estimates the performance decrease rate based on a relationship between the accumulation rate or an accumulation amount of the impurity in the ion exchange membrane and the performance decrease rate.

13. The operation assistance apparatus according to claim 12, further comprising a performance decrease learning unit which generates a performance decrease prediction model, wherein
the performance decrease prediction model outputs, by performing machine learning about the relationship between the accumulation rate or the accumulation amount of the impurity and the performance decrease rate, a prediction amount of the performance decrease rate of the ion exchange membrane that is based on the relationship between the accumulation rate or the accumulation amount of the impurity and the performance decrease rate.

14. The operation assistance apparatus according to claim 13, wherein the performance decrease prediction model outputs, by performing machine learning about a relationship between an operation condition of the electrolyzer and the accumulation rate or the accumulation amount of the impurity, and the performance decrease rate, the prediction amount of the performance decrease rate that is based on the relationship between the operation condition of the electrolyzer and the accumulation rate or the accumulation amount of the impurity, and the performance decrease rate, for each of a plurality of operation conditions including the operation condition.

15. The operation assistance apparatus according to claim 13 or 14, comprising a plurality of performance decrease learning units including the performance decrease learning unit, wherein
each of the plurality of performance decrease learning units including the performance decrease learning unit generates the performance decrease prediction model for each of types of a plurality of ion exchange membranes including the ion exchange membrane.

16. The operation assistance apparatus according to any one of claims 13 to 15, wherein the performance decrease prediction model estimates, based on the accumulation rate or the accumulation amount of the impurity and on a production parameter regarding a product produced by the electrolyzer, an operation condition of the electrolyzer that satisfies the production parameter.

17. The operation assistance apparatus according to claim 16, wherein the performance decrease prediction model estimates, if the operation condition that satisfies the production parameter does not exist, at least one of a recovery time of performance of the ion exchange membrane or a replacement time of the ion exchange membrane.

18. The operation assistance apparatus according to any one of claims 1 to 17, further comprising:
an acquisition unit which acquires an accumulation rate or an accumulation amount of the impurity for a case where the electrolyzer is operated under one operation condition; and
a correction unit which corrects the accumulation rates or the accumulation amounts of the one or more impurities estimated by the estimation unit, based on the accumulation rate or the accumulation amount of the impurity acquired by the acquisition unit.

19. The operation assistance apparatus according to claim 18, wherein
the estimation unit estimates the accumulation rates or the accumulation amounts of the one or more impurities in a first cycle, and
the acquisition unit acquires the accumulation rate or the accumulation amount of the impurity in a second cycle shorter than the first cycle.

20. The operation assistance apparatus according to any one of claims 1 to 19, wherein the impurity is at least one of barium, calcium, strontium, iodine, silicon, aluminum, nickel, magnesium, iron, titanium, or phosphorus.

21. An operation assistance method comprising performing first estimation by estimating, by an estimation unit based on an actual result value of impurity data regarding an accumulation rate of an impurity in an ion exchange membrane in an electrolyzer, a performance decrease rate of the ion exchange membrane.

22. The operation assistance method according to claim 21, wherein
the actual result value of the impurity data includes actual result values of accumulation rates or actual result values of accumulation amounts of one or more elements constituting one or more impurities including the impurity accumulated in the ion exchange membrane, and
the performing the first estimation is, by the estimation unit, estimating the one or more impurities including the impurity based on the actual result values of the accumulation rates or the actual result values of the accumulation amounts of the one or more elements, and estimating the performance decrease rate of the ion exchange membrane based on accumulation rates or accumulation amounts of the one or more impurities including the impurity that have been estimated.

23. The operation assistance method according to claim 21 or 22, wherein the performing the first estimation is estimating, by the estimation unit, the performance decrease rate based on a relationship between a position in a cross sectional direction of the ion exchange membrane and a concentration of the impurity accumulated in the ion exchange membrane.

24. The operation assistance method according to claim 21, wherein
the electrolyzer has an anode chamber and a cathode chamber separated by the ion exchange membrane,
an aqueous solution of an alkali metal chloride is induced into the anode chamber,
the impurity data includes concentration data on an impurity in the aqueous solution of the alkali metal chloride, and
the performing the first estimation is estimating, by the estimation unit, the performance decrease rate of the ion exchange membrane based on the concentration data on the impurity.

25. The operation assistance method according to any one of claims 21 to 24, further comprising performing second estimation by estimating, by the estimation unit based on the performance decrease rate estimated in the performing the first estimation, a production parameter for a case where the electrolyzer is operated under one operation condition, the production parameter being related to a product produced by the electrolyzer.

26. The operation assistance method according to any one of claims 21 to 25, wherein the performing the first estimation is estimating, by the estimation unit, the performance decrease rate based on a relationship between the accumulation rate or an accumulation amount of the impurity in the ion exchange membrane and the performance decrease rate.

27. The operation assistance method according to claim 26, wherein
the performing the first estimation includes learning about a performance decrease by generating, by a performance decrease learning unit, a performance decrease prediction model, and
the performance decrease prediction model outputs, by performing machine learning about the relationship between the accumulation rate or the accumulation amount of the impurity and the performance decrease rate, a prediction amount of the performance decrease rate of the ion exchange membrane that is based on the relationship between the accumulation rate or the accumulation amount of the impurity and the performance decrease rate.

28. The operation assistance method according to claim 27, wherein the performing the first estimation further includes estimating, by the performance decrease prediction model based on the accumulation rate or the accumulation amount of the impurity and on a production parameter regarding a product produced by the electrolyzer, an operation condition of the electrolyzer that satisfies the production parameter.

29. The operation assistance method according to any one of claims 21 to 28, further comprising:
acquiring, by an acquisition unit, an accumulation rate or an accumulation amount of the impurity for a case where the electrolyzer is operated under one operation condition; and
correcting, by a correction unit, the accumulation rates or the accumulation amounts of the one or more impurities estimated in the performing the first estimation, based on the accumulation rate or the accumulation amount of the impurity acquired in performing the acquiring.

30. An operation assistance system comprising: the operation assistance apparatus according to any one of claims 1 to 20; and an electrolytic apparatus having the electrolyzer.

31. An operation assistance program that causes a computer to function as the operation assistance apparatus according to any one of claims 1 to 20.
